(19) Europäisches Patentamt
European Patent Office
Office européen des brevets

(11) **EP 4 498 678 A1**

(12) **EUROPEAN PATENT APPLICATION**
published in accordance with Art. 153(4) EPC

(43) Date of publication:
29.01.2025 Bulletin 2025/05

(51) International Patent Classification (IPC):
*H04N 19/577* (2014.01)

(21) Application number: 23787366.6

(22) Date of filing: 12.01.2023

(52) Cooperative Patent Classification (CPC):
H04N 19/172; H04N 19/42; H04N 19/44;
H04N 19/50; H04N 19/577

(86) International application number:
PCT/CN2023/071928

(87) International publication number:
WO 2023/197717 (19.10.2023 Gazette 2023/42)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.04.2022 CN 202210397258

(71) Applicant: Huawei Technologies Co., Ltd.
Shenzhen, Guangdong 518129 (CN)

(72) Inventors:
• GE, Yunying
  Shenzhen, Guangdong 518129 (CN)
• WANG, Jing
  Shenzhen, Guangdong 518129 (CN)
• SHI, Yibo
  Shenzhen, Guangdong 518129 (CN)

(74) Representative: Epping - Hermann - Fischer
Patentanwaltsgesellschaft mbH
Schloßschmidstraße 5
80639 München (DE)

(54) **IMAGE DECODING METHOD AND APPARATUS, AND IMAGE CODING METHOD AND APPARATUS**

(57) An image decoding method, an image encoding method, and an apparatus are disclosed, and relate to the field of video processing technologies. A decoder side processes, based on a group of feature domain optical flows (for example, an optical flow set) corresponding to an image frame, a first feature map of a reference frame, to obtain a group of intermediate feature maps, the decoder side fuses the group of intermediate feature maps, to obtain a predicted feature map, and the decoder side decodes the image frame based on the predicted feature map, to obtain a target image. A pixel error in the feature domain optical flow is less than a pixel error in an image domain optical flow. Therefore, a decoding error caused by the intermediate feature map determined by the feature domain optical flow is less than a decoding error caused by an image domain optical flow in a common technology. The predicted feature map of the image frame is determined by the decoder side by fusing a plurality of intermediate feature maps, and the predicted feature map includes more image information. When the decoder side decodes the image frame based on the predicted feature map, a problem that it is difficult for a single intermediate feature map to accurately express the target image is avoided, accuracy of image decoding and image quality are improved.

EP 4 498 678 A1

Bitstream

**S910: A decoder side parses the bitstream, to obtain at least one optical flow set**

First feature map of a reference frame $f_{t-1}$

Feature domain optical flow $v_t$

**Optical flow set 1**

**S920: The decoder side processes the first feature map based on one or more feature domain optical flows included in the optical flow set 1, to obtain one or more intermediate feature maps**

Intermediate feature maps
$f_{t-1}$ ... $f_{t-m}$

**S930: The decoder side fuses the one or more intermediate feature maps, to obtain a first predicted feature map of a first image frame**

First predicted feature map $f_{t\_pre}$

**S940: The decoder side decodes the first image frame based on the first predicted feature map, to obtain a first image**

Decoded first image

FIG. 9

## Description

This application claims priority to Chinese Patent Application No. 202210397258.4, filed with the China National Intellectual Property Administration on April 15, 2022 and entitled "IMAGE DECODING METHOD, IMAGE ENCODING METHOD, AND APPARATUS", which is incorporated herein by reference in its entirety.

## TECHNICAL FIELD

This application relates to the field of video processing technologies, and in particular, to an image decoding method, an image encoding method, and an apparatus.

## BACKGROUND

In a video encoding and decoding technology, video compression and video enhancement technologies are particularly important. A video compression system performs spatial (intra-image) prediction and/or temporal (inter-image) prediction to reduce or remove redundant information inherent in a video sequence, and the video enhancement technology is used to improve display quality of an image. For a video decoding process corresponding to video compression or video enhancement, a decoder side decodes, by using a warping (warping) method, an image frame included in a video. Warping means that the decoder side obtains an image domain optical flow between an image frame and a reference frame, and decodes the image frame based on the optical flow. An image domain optical flow indicates a motion speed and a motion direction of a corresponding pixel in two adjacent image frames. However, the warping is sensitive to optical flow precision, and a subtle change in the optical flow precision affects warping accuracy. Because an error of optical flow prediction between two adjacent image frames is large, for example, an error of five pixels or more pixels, accuracy of decoding, by the decoder side, the image frame based on the image domain optical flow is low. As a result, definition of an image obtained through decoding is affected. Therefore, how to provide a more effective image decoding method becomes an urgent problem to be resolved currently.

## SUMMARY

This application provides an image decoding method, an image encoding method, and an apparatus, to resolve a problem that definition of an image obtained through decoding is affected because accuracy of decoding an image frame based on an image domain optical flow is low.

The following technical solutions are used in this application.

According to a first aspect, this application provides an image decoding method. The method is applied to a video encoding and decoding system, or a physical device that supports implementation of the image decoding method in the video encoding and decoding system. For example, the physical device is a decoder side or a video decoder (decoder). In some cases, the physical device may include a chip system. Herein, an example in which the decoder side performs the image decoding method is used for description. The image decoding method includes: First, the decoder side parses a bitstream, to obtain at least one optical flow set, where the at least one optical flow set includes a first optical flow set, the first optical flow set corresponds to a first feature map of a reference frame of a first image frame, the first optical flow set includes one or more feature domain optical flows, and any one of the one or more feature domain optical flows indicates motion information between a feature map of the first image frame and the first feature map. Next, the decoder side processes the first feature map based on the one or more feature domain optical flows included in the first optical flow set, to obtain one or more intermediate feature maps corresponding to the first feature map. In addition, the decoder side fuses the one or more intermediate feature maps, to obtain a first predicted feature map of the first image frame. Finally, the decoder side decodes the first image frame based on the first predicted feature map, to obtain a first image.

In this embodiment, for a single feature domain optical flow, a pixel error in the feature domain optical flow is less than a pixel error in an image domain optical flow. Therefore, a decoding error caused by the intermediate feature map determined by the decoder side based on the feature domain optical flow is less than a decoding error caused by an image domain optical flow in a common technology. In other words, the decoder side decodes the image frame based on the feature domain optical flow, thereby reducing a decoding error caused by an image domain optical flow between two adjacent image frames, and improving accuracy of image decoding. In addition, the decoder side fuses the plurality of intermediate feature maps determined based on the optical flow set and the feature map of the reference frame, to obtain the predicted feature map of the image frame. The predicted feature map includes more image information than a single image domain optical flow. In this way, when the decoder side decodes the image frame based on the predicted feature map obtained through fusion, a problem that it is difficult for information indicated by the single image domain optical flow to accurately express the first image is avoided, and the accuracy of the image decoding and image quality (for example, image definition) are improved.

In an optional implementation, that the decoder side processes the first feature map based on the one or more feature domain optical flows included in the first optical flow set, to obtain one or more intermediate feature maps corresponding to the first feature map includes: The decoder side parses the bitstream, to obtain the first feature map of the reference frame. The decoder side performs warping (warping) on the first feature map based on a first feature domain optical flow in the one or more feature domain optical flows included in the first optical flow set, to obtain an intermediate feature map corresponding to the first feature domain optical flow, where the first feature domain optical flow is any one of the one or more feature domain optical flows.

In this embodiment, the decoder side performs warping on the first feature map based on a group of feature domain optical flows. Then, after the decoder side obtains the image corresponding to the reference frame, the decoder side may perform, in the image corresponding to the reference frame based on the group of feature domain optical flows, interpolation on corresponding positions of the group of feature domain optical flows in the image corresponding to the reference frame, to obtain a predicted value of a pixel value in the first image, so as to obtain the first image. This avoids that the decoder side needs to predict all pixel values of the first image based on the image domain optical flow, reduces a computing amount required by the decoder side to perform the image decoding, and improves image decoding efficiency.

In another optional implementation, the first optical flow set further corresponds to a second feature map of the reference frame. In the image decoding method provided in this embodiment, before the decoder side decodes the first image frame based on the first predicted feature map, to obtain the first image, the image decoding method further includes: In a first step, the decoder side processes the second feature map based on the one or more feature domain optical flows included in the first optical flow set, to obtain one or more intermediate feature maps corresponding to the second feature map. In a second step, the decoder side fuses the one or more intermediate feature maps corresponding to the second feature map, to obtain a second predicted feature map of the first image frame. In this way, the decoder side may decode the first image frame based on the first predicted feature map and the second predicted feature map, to obtain the first image.

In this embodiment, a plurality of feature maps (or referred to as a group of feature maps) of the reference frame may correspond to an optical flow set (or referred to as a group of feature domain optical flows). In other words, a plurality of feature maps belonging to a same group share a group of feature domain optical flows, and the decoder side processes a feature map based on a group of feature domain optical flows corresponding to the feature map, to obtain an intermediate feature map corresponding to the feature map. Further, the decoder side fuses the intermediate feature map corresponding to the feature map, to obtain a predicted feature map corresponding to the feature map. Finally, the decoder side decodes an image frame based on predicted feature maps corresponding to all feature maps of the reference frame, to obtain a target image. In this way, in an image decoding process, if the reference frame corresponds to a plurality of feature maps, the decoder side may divide the plurality of feature maps into one or more groups, and feature maps belonging to a same group share an optical flow set. The decoder side fuses intermediate feature maps corresponding to the feature maps, to obtain a predicted feature map. This avoids a problem that when the reference frame or the image frame has much information, the decoder side reconstructs the image based on the feature map with low precision and at a low speed, and improves the accuracy of the image decoding. It should be noted that quantities of channels of feature maps belonging to different groups may be different.

In another optional implementation, that the decoder side fuses the one or more intermediate feature maps, to obtain a first predicted feature map of the first image frame includes: The decoder side obtains one or more weight values of the one or more intermediate feature maps, where one intermediate feature map corresponds to one weight value. The decoder side processes, based on the one or more weight values, the one or more intermediate feature maps corresponding to the one or more weight values respectively, and adds all processed intermediate feature maps, to obtain the first predicted feature map. The weight value indicates a weight occupied by the intermediate feature map in the first predicted feature map.

In this embodiment, for the plurality of intermediate feature maps corresponding to the first feature map, weight values of the intermediate feature maps may be different. In other words, the decoder side may set different weight values for the intermediate feature maps based on an image decoding requirement. For example, if images corresponding to some intermediate feature maps are blurry, weight values of the intermediate feature maps are reduced, thereby improving definition of the first image.

In another optional implementation, that the decoder side fuses the one or more intermediate feature maps, to obtain a first predicted feature map of the first image frame includes: inputting, to a feature fusion model, the one or more intermediate feature maps corresponding to the first feature map, to obtain the first predicted feature map. The feature fusion model includes a convolutional network layer, and the convolutional network layer is used to fuse the one or more intermediate feature maps.

In the common technology, the decoder side obtains a plurality of image domain optical flows between the image frame and the reference frame, and obtains a plurality of images based on the plurality of image domain optical flows and the reference frame, to fuse the plurality of images, so as to obtain the target image corresponding to the image frame. Therefore, the decoder side needs to predict pixel values of a plurality of images for decoding an image frame, and fuses the plurality of images, to obtain a target image. As a result, computing resources required for image decoding are large, and efficiency of decoding a video by the decoder side based on an image domain optical flow is low.

In this embodiment, for example, in the image decoding process, because computing resources required for feature map fusing are less than computing resources required for feature map decoding, the decoder side fuses the plurality of intermediate feature maps by using the feature fusion model. Further, the decoder side decodes the image frame based on the predicted feature map obtained by fusing the plurality of intermediate feature maps, that is, the decoder side needs to predict, based on the predicted feature map, only a pixel value of an image position indicated by the predicted feature map in the image, and does not need to predict all pixel values of the plurality of images. This reduces the computing resources required for the image decoding, and improves the image decoding efficiency.

In another optional implementation, the image decoding method provided in this application further includes: First, the decoder side obtains a feature map of the first image. Next, the decoder side obtains an enhanced feature map based on the feature map of the first image, the first feature map, and the first predicted feature map. Finally, the decoder side processes the first image based on the enhanced feature map, to obtain a second image. Definition of the second image is higher than definition of the first image.

In this embodiment, the decoder side may fuse the feature map of the first image, the first feature map, and the first predicted feature map, and perform video enhancement processing on the first image based on the enhanced feature map obtained through fusion, to obtain the second image with better definition. This improves definition of a decoded image and image display effect.

In another optional implementation, that the decoder side processes the first image based on the enhanced feature map, to obtain a second image includes: The decoder side obtains an enhancement layer image of the first image based on the enhanced feature map, and reconstructs the first image based on the enhancement layer image, to obtain the second image. For example, the enhancement layer image may be an image determined by the decoder side based on the reference frame and the enhanced feature map, and the decoder side adds a part or all of information of the enhancement layer image on the basis of the first image, to obtain the second image. Alternatively, the decoder side uses the enhancement layer image as a reconstructed image of the first image, namely, the second image. In this example, the decoder side obtains the plurality of feature maps of the image at different stages, and obtains the enhanced feature map determined by the plurality of feature maps, to reconstruct the first image and perform video enhancement based on the enhanced feature map. This improves the definition of the decoded image and the image display effect.

According to a second aspect, this application provides an image encoding method. The method is applied to a video encoding and decoding system, or a physical device that supports implementation of the image encoding method in the video encoding and decoding system. For example, the physical device is an encoder side or a video encoder (encoder). In some cases, the physical device may include a chip system. Herein, an example in which the encoder side performs the image encoding method is used for description. The image encoding method includes: In a first step, the encoder side obtains a feature map of a first image frame and a first feature map of a reference frame of the first image frame. In a second step, the encoder side obtains at least one optical flow set based on the feature map of the first image frame and the first feature map, where the at least one optical flow set includes a first optical flow set, the first optical flow set corresponds to the first feature map, the first optical flow set includes one or more feature domain optical flows, and any one of the one or more feature domain optical flows indicates motion information between the feature map of the first image frame and the first feature map. In a third step, the encoder side processes the first feature map based on the one or more feature domain optical flows included in the first optical flow set, to obtain one or more intermediate feature maps corresponding to the first feature map. In a fourth step, the encoder side fuses the one or more intermediate feature maps, to obtain a first predicted feature map of the first image frame. In a fifth step, the encoder side encodes the first image frame based on the first predicted feature map, to obtain a bitstream. Optionally, the bitstream includes a feature domain optical flow bitstream corresponding to the at least one optical flow set, and a residual bitstream of an image region corresponding to the first predicted feature map.

In this embodiment, for a single feature domain optical flow, a pixel error in the feature domain optical flow is less than a pixel error in an image domain optical flow. Therefore, an encoding error caused by the intermediate feature map determined by the encoder side based on the feature domain optical flow is less than an encoding error caused by an image domain optical flow in a common technology. In other words, the encoder side encodes the image frame based on the feature domain optical flow, thereby reducing an encoding error caused by an image domain optical flow between two adjacent image frames, and improving accuracy of image encoding. In addition, the encoder side processes the feature map of the reference frame based on the plurality of feature domain optical flows, to obtain the plurality of intermediate feature maps, and fuses the plurality of intermediate feature maps, to determine the predicted feature map of the image frame. In other words, the encoder side fuses the plurality of intermediate feature maps determined by the optical flow set and the feature map of the reference frame, to obtain the predicted feature map of the image frame. The predicted feature map includes more image information, so that when the encoder side encodes the image frame based on the predicted feature map obtained through fusion, a problem that it is difficult for a single intermediate feature map to accurately express a first image is avoided, and the accuracy of the image encoding and image quality (for example, image definition) are improved.

In an optional implementation, that the encoder side processes the first feature map based on the one or more feature domain optical flows included in the first optical flow set, to obtain one or more intermediate feature maps corresponding to the first feature map includes: performing warping on the first feature map based on a first feature domain optical flow in the one or more feature domain optical flows included in the first optical flow set, to obtain an intermediate feature map corresponding to the first feature domain optical flow. The first feature domain optical flow is any one of the one or more feature domain optical flows included in the first optical flow set.

In this embodiment, for example, in an image encoding process, because computing resources required for feature map fusing are less than computing resources required for feature map encoding, the encoder side fuses the plurality of intermediate feature maps by using a feature fusion model. Further, the encoder side encodes the image frame based on the predicted feature map obtained by fusing the plurality of intermediate feature maps, that is, the encoder side needs to predict, based on the predicted feature map, only a pixel value of an image position indicated by the predicted feature map in the image, and does not need to predict all pixel values of a plurality of images. This reduces computing resources required for image encoding, and improves image encoding efficiency.

In another optional implementation, the first optical flow set further corresponds to a second feature map of the reference frame. Before the encoder side encodes the first image frame based on the first predicted feature map, to obtain the bitstream, the image encoding method provided in this embodiment further includes: In a first step, the encoder side processes the second feature map based on the one or more feature domain optical flows included in the first optical flow set, to obtain one or more intermediate feature maps corresponding to the second feature map. In a second step, the encoder side fuses the one or more intermediate feature maps corresponding to the second feature map, to obtain a second predicted feature map of the first image frame. In this way, that the encoder side encodes the first image frame based on the first predicted feature map, to obtain a bitstream may include: The encoder side encodes the first image frame based on the first predicted feature map and the second predicted feature map, to obtain the bitstream. In this embodiment, the plurality of feature maps (or referred to as a group of feature maps) of the reference frame may correspond to an optical flow set (or referred to as a group of feature domain optical flows). In other words, a plurality of feature maps belonging to a same group share a group of feature domain optical flows, and the encoder side processes a feature map based on a group of feature domain optical flows corresponding to the feature map, to obtain an intermediate feature map corresponding to the feature map. Further, the encoder side fuses the intermediate feature map corresponding to the feature map, to obtain a predicted feature map corresponding to the feature map. Finally, the encoder side encodes an image frame based on predicted feature maps corresponding to all feature maps of the reference frame, to obtain a target bitstream. In this way, in the image encoding process, if the reference frame corresponds to a plurality of feature maps, the encoder side may divide the plurality of feature maps into one or more groups, and feature maps belonging to a same group share an optical flow set. The encoder side fuses intermediate feature maps corresponding to the feature maps, to obtain a predicted feature map. This avoids a problem that when the reference frame or the image frame has much information, the bitstream obtained by the encoder side through encoding based on the feature map has a large amount of redundancy and low precision, and improves the accuracy of the image encoding. It should be noted that quantities of channels of feature maps belonging to different groups may be different.

In another optional implementation, that the encoder side fuses the one or more intermediate feature maps, to obtain a first predicted feature map of the first image frame includes: The encoder side obtains one or more weight values of the one or more intermediate feature maps, where one intermediate feature map corresponds to one weight value. The encoder side processes, based on the one or more weight values, the one or more intermediate feature maps corresponding to the one or more weight values respectively, and adds all processed intermediate feature maps, to obtain the first predicted feature map. The weight value indicates a weight occupied by the intermediate feature map in the first predicted feature map. In this embodiment, for the plurality of intermediate feature maps corresponding to the first feature map, weight values of the intermediate feature maps may be different. In other words, the encoder side may set different weight values for the intermediate feature maps based on image encoding requirements. For example, if images corresponding to some intermediate feature maps are blurry, weight values of the intermediate feature maps are reduced, thereby improving definition of the first image.

In another optional implementation, that the encoder side fuses the one or more intermediate feature maps, to obtain a first predicted feature map of the first image frame includes: The encoder side inputs, to a feature fusion model, the one or more intermediate feature maps corresponding to the first feature map, to obtain the first predicted feature map. The feature fusion model includes a convolutional network layer, and the convolutional network layer is used to fuse the intermediate feature map. In the image encoding process, because the computing resources required for feature map fusing are less than the computing resources required for feature map encoding, the encoder side fuses the plurality of intermediate feature maps by using the feature fusion model. Further, the encoder side encodes the image frame based on the predicted feature map obtained by fusing the plurality of intermediate feature maps. This reduces the computing resources required for the image encoding, and improves the image encoding efficiency.

According to a third aspect, an image decoding apparatus is provided. The image decoding apparatus may be used in a decoder side, or a video encoding and decoding system that supports implementation of the image decoding method. The image decoding apparatus includes modules configured to perform the image decoding method according to the first aspect or any one of the possible implementations of the first aspect. For example, the image decoding apparatus includes a bitstream unit, a processing unit, a fusion unit, and a decoding unit.

The bitstream unit is configured to parse a bitstream, to obtain at least one optical flow set, where the at least one optical flow set includes a first optical flow set, the first optical flow set corresponds to a first feature map of a reference frame of a first image frame, the first optical flow set includes one or more feature domain optical flows, and any one of the one or more feature domain optical flows indicates motion information between a feature map of the first image frame and the first feature map.

The processing unit is configured to process the first feature map based on the one or more feature domain optical flows included in the first optical flow set, to obtain one or more intermediate feature maps corresponding to the first feature map.

The fusion unit is configured to fuse the one or more intermediate feature maps, to obtain a first predicted feature map of the first image frame.

The decoding unit is configured to decode the first image frame based on the first predicted feature map, to obtain a first image.

For beneficial effect, refer to the descriptions according to any implementation of the first aspect. Details are not described herein again. The image decoding apparatus has a function of implementing behavior in the method instance according to any implementation of the first aspect. The function may be implemented by hardware or may be implemented by hardware executing corresponding software. The hardware or the software includes one or more modules corresponding to the function.

In an optional implementation, the processing unit is specifically configured to: parse the bitstream, to obtain the first feature map of the reference frame; and perform warping (warping) on the first feature map based on a first feature domain optical flow, to obtain an intermediate feature map corresponding to the first feature domain optical flow, where the first feature domain optical flow is any one of the one or more feature domain optical flows included in the first optical flow set.

In another optional implementation, the first optical flow set further corresponds to a second feature map of the reference frame. The processing unit is further configured to process the second feature map based on the one or more feature domain optical flows included in the first optical flow set, to obtain one or more intermediate feature maps corresponding to the second feature map. The fusion unit is further configured to fuse the one or more intermediate feature maps corresponding to the second feature map, to obtain a second predicted feature map of the first image frame. The decoding unit is specifically configured to decode the first image frame based on the first predicted feature map and the second predicted feature map, to obtain the first image.

In another optional implementation, the fusion unit is specifically configured to: obtain one or more weight values of the one or more intermediate feature maps, where one intermediate feature map corresponds to one weight value, and the weight value indicates a weight occupied by the intermediate feature map in the first predicted feature map; and process, based on the one or more weight values, the one or more intermediate feature maps corresponding to the one or more weight values respectively, and add all processed intermediate feature maps, to obtain the first predicted feature map.

In another optional implementation, the fusion unit is specifically configured to input, to a feature fusion model, the one or more intermediate feature maps corresponding to the first feature map, to obtain the first predicted feature map. The feature fusion model includes a convolutional network layer, and the convolutional network layer is used to fuse the one or more intermediate feature maps.

In another optional implementation, the image decoding apparatus further includes an obtaining unit and an enhancement unit. The obtaining unit is configured to obtain a feature map of the first image. The fusion unit is further configured to obtain an enhanced feature map based on the feature map of the first image, the first feature map, and the first predicted feature map. The enhancement unit is configured to process the first image based on the enhanced feature map, to obtain a second image. Definition of the second image is higher than definition of the first image.

In another optional implementation, the enhancement unit is specifically configured to: obtain an enhancement layer image of the first image based on the enhanced feature map; and reconstruct the first image based on the enhancement layer image, to obtain the second image.

According to a fourth aspect, an image encoding apparatus is provided. The image encoding apparatus may be used in an encoder side, or a video encoding and decoding system that supports implementation of the image encoding method. The image encoding apparatus includes modules configured to perform the image encoding method according to the second aspect or any one of the possible implementations of the second aspect. For example, the image encoding apparatus includes an obtaining unit, a processing unit, a fusion unit, and an encoding unit.

The obtaining unit is configured to obtain a feature map of a first image frame and a first feature map of a reference frame of the first image frame.

The processing unit is configured to obtain at least one optical flow set based on the feature map of the first image frame and the first feature map, where the at least one optical flow set includes a first optical flow set, the first optical flow set corresponds to the first feature map of the reference frame of the first image frame, the first optical flow set includes one or more feature domain optical flows, and any one of the one or more feature domain optical flows indicates motion information between the feature map of the first image frame and the first feature map.

The processing unit is further configured to process the first feature map based on the one or more feature domain optical flows included in the first optical flow set, to obtain one or more intermediate feature maps corresponding to the first feature map.

The fusion unit is configured to fuse the one or more intermediate feature maps, to obtain a first predicted feature map of the first image frame.

The encoding unit is configured to encode the first image frame based on the first predicted feature map, to obtain a bitstream.

Optionally, the bitstream includes a feature domain optical flow bitstream corresponding to the at least one optical flow set, and a residual bitstream of an image region corresponding to the first predicted feature map.

For beneficial effect, refer to the descriptions according to any implementation of the second aspect. Details are not described herein again. The image encoding apparatus has a function of implementing behavior in the method instance according to any implementation of the second aspect. The function may be implemented by hardware or may be implemented by hardware executing corresponding software. The hardware or the software includes one or more modules corresponding to the function.

In an optional implementation, the processing unit is specifically configured to: perform warping (warping) on the first feature map based on a first feature domain optical flow in the one or more feature domain optical flows included in the first optical flow set, to obtain an intermediate feature map corresponding to the first feature domain optical flow, where the first feature domain optical flow is any one of the one or more feature domain optical flows included in the first optical flow set.

In another optional implementation, the first optical flow set further corresponds to a second feature map of the reference frame. The processing unit is further configured to process the second feature map based on the one or more feature domain optical flows included in the first optical flow set, to obtain one or more intermediate feature maps corresponding to the second feature map. The fusion unit is further configured to fuse the one or more intermediate feature maps corresponding to the second feature map, to obtain a second predicted feature map of the first image frame. The encoding unit is specifically configured to encode the first image frame based on the first predicted feature map and the second predicted feature map, to obtain the bitstream.

In another optional implementation, the fusion unit is specifically configured to: obtain one or more weight values of the one or more intermediate feature maps, where one intermediate feature map corresponds to one weight value, and the weight value indicates a weight occupied by the intermediate feature map in the first predicted feature map; and process, based on the one or more weight values, the one or more intermediate feature maps corresponding to the one or more weight values respectively, and add all processed intermediate feature maps, to obtain the first predicted feature map.

In another optional implementation, the fusion unit is specifically configured to input, to a feature fusion model, the one or more intermediate feature maps corresponding to the first feature map, to obtain the first predicted feature map. The feature fusion model includes a convolutional network layer, and the convolutional network layer is used to fuse the one or more intermediate feature maps.

According to a fifth aspect, an image coding apparatus is provided. The image coding apparatus includes at least one processor and a memory. The memory is configured to store program code. When invoking the program code, the processor performs operation steps of the image decoding method according to the first aspect or any one of the possible implementations of the first aspect. For example, the image coding apparatus may be a decoder side or a video decoder included in a video encoding and decoding system.

Alternatively, when invoking the program code in the memory, the processor performs operation steps of the image encoding method according to the second aspect or any one of the possible implementations of the second aspect. For example, the image coding apparatus may be an encoder side or a video encoder included in a video encoding and decoding system.

According to a sixth aspect, a computer-readable storage medium is provided. The storage medium stores a computer program or instructions. When the computer program or the instructions are executed by an electronic device, operation steps of the image decoding method according to the first aspect or any one of the possible implementations of the first aspect are performed, and/or operation steps of the image encoding method according to the second aspect or any one of the possible implementations of the second aspect are performed. For example, the electronic device is the image coding apparatus.

According to a seventh aspect, another computer-readable storage medium is provided. The computer-readable storage medium stores a bitstream obtained by using the image encoding method according to the second aspect or any one of the possible implementations of the second aspect. For example, the bitstream may include a feature domain optical flow bitstream corresponding to at least one optical flow set according to the second aspect, and a residual bitstream of an image region corresponding to a first predicted feature map.

According to an eighth aspect, a video encoding and decoding system is provided, including an encoder side and a decoder side. The decoder side may perform operation steps of the image decoding method according to the first aspect or any one of the possible implementations of the first aspect. The encoder side may perform operation steps of the image encoding method according to the second aspect or any one of the possible implementations of the second aspect. For beneficial effect, refer to the descriptions according to any implementation of the first aspect or the descriptions according to any implementation of the second aspect. Details are not described herein again.

According to a ninth aspect, a computer program product is provided. When the computer program product is run on an electronic device, the electronic device is enabled to perform operation steps of the method according to the first aspect or any one of the possible implementations of the first aspect, and/or when the computer program product is run on a computer, the computer is enabled to perform operation steps of the method according to the first aspect or any one of the possible implementations of the first aspect. For example, the electronic device is the image coding apparatus.

According to a tenth aspect, a chip is provided, including a control circuit and an interface circuit. The interface circuit is configured to: receive a signal from a device other than the chip and transmit the signal to a processor, or send a signal from the control circuit to a device other than the chip. The control circuit is configured to implement, through a logic circuit or by executing code instructions, operation steps of the method according to the first aspect or any one of the possible implementations of the first aspect, and/or operation steps of the method according to the second aspect or any one of the possible implementations of the second aspect. For example, the chip is the image coding apparatus. In this application, based on the implementations according to the foregoing aspects, the implementations may be further combined to provide more implementations.

**BRIEF DESCRIPTION OF DRAWINGS**

FIG. 1 is an example block diagram of a video encoding and decoding system according to this application;

FIG. 2 is a diagram of a mapping relationship between an optical flow and a color according to this application;

FIG. 3 is a diagram of warping according to this application;

FIG. 4 is a diagram of an architecture of a video compression system according to this application;

FIG. 5 is a schematic flowchart of an image encoding method according to this application;

FIG. 6 is a diagram of a structure of a feature extraction network according to this application;

FIG. 7 is a diagram of a structure of an optical flow estimation network according to this application;

FIG. 8 is a schematic flowchart of warping and feature fusion according to this application;

FIG. 9 is a schematic flowchart 1 of an image decoding method according to this application;

FIG. 10 is a diagram of structures of a feature encoding network and a feature decoding network according to this application;

FIG. 11 is a schematic flowchart 2 of an image decoding method according to this application;

FIG. 12 is a diagram of a structure of an image reconstruction network according to this application;

FIG. 13 is a diagram of a deformable convolutional network according to this application;

FIG. 14 is a diagram of efficiency comparison according to this application;

FIG. 15 is a diagram of a structure of an image encoding apparatus according to this application;

FIG. 16 is a diagram of a structure of an image decoding apparatus according to this application; and

FIG. 17 is a diagram of a structure of an image coding apparatus according to this application.

**DESCRIPTION OF EMBODIMENTS**

Embodiments of this application provide an image decoding (encoding) method, including: A decoder side (or an encoder side) obtains a plurality of intermediate feature maps between a group of feature domain optical flows (or referred to as an optical flow set) and between feature maps of a reference frame, and fuses the plurality of intermediate feature maps, to obtain a predicted feature map of the image frame, so that the decoder side (or the encoder side) decodes (or encodes) the image frame based on the predicted feature map, to obtain a target image (or a bitstream) corresponding to the image frame. An image decoding process is used as an example. For a single feature domain optical flow, a pixel error in the feature domain optical flow is less than a pixel error in an image domain optical flow. Therefore, a decoding error caused by the intermediate feature map determined by the decoder side based on the feature domain optical flow is less than a decoding error caused by an image domain optical flow in a common technology.

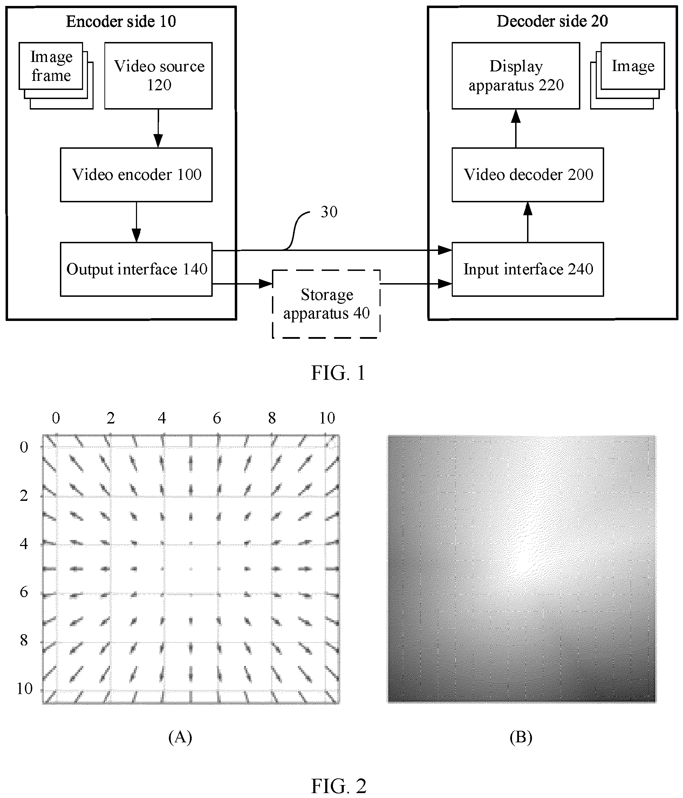

In other words, the decoder side decodes the image frame based on the feature domain optical flow, thereby reducing a decoding error caused by an image domain optical flow between two adjacent image frames, and improving accuracy of image decoding. In addition, the decoder side processes the feature map of the reference frame based on the plurality of feature domain optical flows, to obtain the plurality of intermediate feature maps, and fuses the plurality of intermediate feature maps, to determine the predicted feature map of the image frame. In other words, the decoder side fuses the plurality of intermediate feature maps determined by the optical flow set and the feature map of the reference frame, to obtain the predicted feature map of the image frame. The predicted feature map includes more image information. In this way, when the decoder side decodes the image frame based on the predicted feature map obtained through fusion, a problem that it is difficult for a single intermediate feature map to accurately express a first image is avoided, and the accuracy of the image decoding and image quality (for example, image definition) are improved. The following describes solutions provided in this application with reference to embodiments. For clear and brief description of the following embodiments, a brief description of a related technology is first provided. FIG. 1 is an example block diagram of a video encoding and decoding system according to this application. As used in this specification, a term "video coder" is usually both a video encoder and a video decoder. In this application, a term "video coding" or "coding" may be usually video encoding or video decoding. For example, an encoder side or a decoder side may be collectively referred to as an image coding apparatus.

As shown in FIG. 1, the video encoding and decoding system includes an encoder side 10 and a decoder side 20. The encoder side 10 generates encoded video data. Therefore, the encoder side 10 may be referred to as a video encoding apparatus. The decoder side 20 may decode the encoded video data (for example, a video including one or more image frames) generated by the encoder side 10. Therefore, the decoder side 20 may be referred to as a video decoding apparatus. Various implementation solutions of the encoder side 10, the decoder side 20, or both may include one or more processors and a memory coupled to the one or more processors. The memory may include but is not limited to a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a flash memory, or any other medium that can be used to store desired program code in a form of instructions or a data structure accessible by a computer.

The encoder side 10 and the decoder side 20 may include various apparatuses, including a desktop computer, a mobile computing apparatus, a notebook (for example, laptop) computer, a tablet computer, a set-top box, a handheld telephone set like a "smart" phone, a television set, a camera, a display apparatus, a digital media player, a video game console, a vehicle-mounted computer, or a similar apparatus.

The decoder side 20 may receive the encoded video data from the encoder side 10 through a link 30. The link 30 may include one or more media or apparatuses that can move the encoded video data from the encoder side 10 to the decoder side 20. In an example, the link 30 may include one or more communication media that enable the encoder side 10 to directly transmit the encoded video data to the decoder side 20 in real time. In this example, the encoder side 10 may modulate the encoded video data according to a communication standard (for example, a wireless communication protocol), and may transmit modulated video data to the decoder side 20. The one or more communication media may include a wireless and/or wired communication medium, for example, a radio frequency (radio frequency, RF) spectrum or one or more physical transmission lines. The one or more communication media may constitute a part of a packet-based network, and the packet-based network is, for example, a local area network, a wide area network, or a global network (for example, the Internet). The one or more communication media may include a router, a switch, a base station, or another device that facilitates communication from the encoder side 10 to the decoder side 20.

In another example, the encoded data may be output to a storage apparatus 40 through an output interface 140. Similarly, the encoded data may be accessed from the storage apparatus 40 through an input interface 240. The storage apparatus 40 may include any one of a plurality of distributed data storage media or locally accessible data storage media, for example, a hard disk drive, a Blu-ray disc, a digital video disc (digital video disc, DVD), a compact disc read-only memory (compact disc read-only memory, CD-ROM), a flash memory, a volatile or nonvolatile memory, or any other appropriate digital storage media configured to store the encoded video data.

In another example, the storage apparatus 40 may correspond to a file server or another intermediate storage apparatus that can keep the encoded video generated by the encoder side 10. The decoder side 20 may access the stored video data from the storage apparatus 40 through streaming transmission or downloading. The file server may be any type of server that can store the encoded video data and transmit the encoded video data to the decoder side 20. In an example, the file server includes a network server (for example, used for a website), a file transfer protocol (file transfer protocol, FTP) server, a network attached storage (network attached storage, NAS) apparatus, or a local disk drive. The decoder side 20 may access the encoded video data through any standard data connection (including an Internet connection). The standard data connection may include a wireless channel (for example, a wireless fidelity (wireless fidelity, Wi-Fi) connection), a wired connection (for example, a digital subscriber line (digital subscriber line, DSL), or a cable modem), or a combination of a wireless channel and a wired connection, where the combination is suitable for accessing the encoded video data stored on the file server. The encoded video data may be transmitted from the storage apparatus 40 through the streaming transmission, the downloading transmission, or a combination thereof.

The image decoding method provided in this application may be applied to video encoding and decoding, to support a plurality of multimedia applications, for example, over-the-air television broadcasting, cable television transmission, satellite television transmission, streaming video transmission (for example, over the Internet), encoding of video data stored in a data storage medium, decoding of video data stored in a data storage medium, or another application. In some examples, the video encoding and decoding system may be configured to support unidirectional or bidirectional video transmission, to support applications such as video streaming transmission, video enhancement, video playback, video broadcasting, and/or videotelephony.

The video encoding and decoding system described in FIG. 1 is merely an example, and the technologies of this application are applicable to video coding setting (for example, video encoding or video decoding) that does not necessarily include any data communication between an encoding apparatus and a decoding apparatus. In another example, data is retrieved from a local memory, transmitted in a streaming manner over a network, or the like. The video encoding apparatus may encode data and store the data in the memory, and/or the video decoding apparatus may retrieve the data from the memory and decode the data. In many examples, encoding and decoding are performed by apparatuses that do not communicate with each other, but simply encode data and store the data in the memory and/or retrieve data from the memory and decode the data.

In the example in FIG. 1, the encoder side 10 includes a video source 120, a video encoder 100, and the output interface 140. In some examples, the output interface 140 may include a modulator/demodulator (a modem) and/or a transmitter. The video source 120 may include a video capture apparatus (for example, a video camera), a video archive including previously captured video data, a video feed-in interface for receiving video data from a video content provider, and/or a computer graphics system for generating video data, or a combination of the video data sources.

The video encoder 100 may encode video data from the video source 120. In some examples, the encoder side 10 directly transmits the encoded video data to the decoder side 20 through the output interface 140. In another example, the encoded video data may be further stored in the storage apparatus 40, so that the decoder side 20 subsequently accesses the encoded video data for decoding and/or playing.

In the example in FIG. 1, the decoder side 20 includes the input interface 240, a video decoder 200, and a display apparatus 220. In some examples, the input interface 240 includes a receiver and/or a modem. The input interface 240 may receive the encoded video data through the link 30 and/or from the storage apparatus 40. The display apparatus 220 may be integrated with the decoder side 20 or may be disposed outside the decoder side 20. Usually, the display apparatus 220 displays decoded video data. The display apparatus 220 may include a plurality of types of display apparatuses, for example, a liquid crystal display (liquid crystal display, LCD), a plasma display, an organic light-emitting diode (organic light-emitting diode, OLED) display, or another type of display apparatus.

In some aspects, although not shown in FIG. 1, the video encoder 100 and the video decoder 200 may be integrated with an audio encoder and an audio decoder respectively, and may include an appropriate multiplexer-demultiplexer unit or other hardware and software, to encode both an audio and a video in a common data stream or separate data streams. In some examples, if appropriate, the MUX-DEMUX unit may comply with the ITU H.223 multiplexer protocol or another protocol like a user datagram protocol (user datagram protocol, UDP).

The video encoder 100 and the video decoder 200 each may be implemented as any one of a plurality of circuits, for example, one or more microprocessors, digital signal processors (digital signal processor, DSP), application-specific integrated circuits (application-specific integrated circuit, ASIC), field programmable gate arrays (field programmable gate array, FPGA), discrete logic, hardware, or any combination thereof. If this application is implemented partially through software, the apparatus may store, in an appropriate nonvolatile computer-readable storage medium, instructions used for the software, and may use one or more processors to execute the instructions in hardware, to implement the technologies in this application. Any one of the foregoing content (including hardware, software, a combination of hardware and software, and the like) may be considered as one or more processors. The video encoder 100 and the video decoder 200 each may be included in one or more encoders or decoders. Either the encoder or the decoder may be integrated as a part of a combined encoder/decoder (codec) in a corresponding apparatus.

In this application, the video encoder 100 may be roughly referred to as another apparatus "signaling" or "sending" some information to, for example, the video decoder 200. The term "signaling" or "sending" may roughly be transmitting a syntax element and/or other data used to decode compressed video data. The transmission may occur in real time or almost in real time. Alternatively, the communication may be performed after a period of time, for example, performed when a syntax element in an encoded bitstream is stored in a computer-readable storage medium during encoding. Then, the decoding apparatus may retrieve the syntax element at any time after the syntax element is stored in the medium.

A video sequence usually includes a series of video frames or pictures. For example, a group of pictures (group of picture, GOP) includes a series of video pictures, or one or more video pictures. The GOP may include syntactic data included in header information of the GOP, in header information of one or more of the pictures, or elsewhere, and the syntactic data describes a quantity of pictures included in the GOP. Each slice of a picture may include slice syntactic data describing an encoding mode of the corresponding picture. The video encoder 100 usually performs an operation on a video block in a video slice, to encode video data. A video block may correspond to a decoding node in a CU. A size of the video block may be fixed or changeable, and may vary with a specified decoding standard.

In some feasible implementations, the video encoder 100 may scan a quantized transform coefficient in a predefined scanning order to generate a serialized vector that can be entropy encoded. In other feasible implementations, the video encoder 100 may perform adaptive scanning. After scanning the quantized transform coefficient to form a one-dimensional vector, the video encoder 100 may perform entropy decoding on the one-dimensional vector by using context-based adaptive variable-length coding (context-based adaptive variable-length coding, CAVLC), context-based adaptive binary arithmetic coding (context-based adaptive binary arithmetic coding, CABAC), syntax-based context-adaptive binary arithmetic coding (syntax-based adaptive binary arithmetic coding, SBAC), probability interval partitioning entropy (probability interval partitioning entropy, PIPE) decoding, or another entropy decoding method. The video encoder 100 may further perform entropy encoding on the syntax element associated with the encoded video data, for the video decoder 200 to decode the video data.

To perform the CABAC, the video encoder 100 may assign context in a context model to a to-be-transmitted symbol. The context may be related to whether a neighboring value of the symbol is non-zero. To perform the CAVLC, the video encoder 100 may select variable-length code of the to-be-transmitted symbol. A codeword in variable-length coding (variable-length coding, VLC) may be constructed, so that shorter code corresponds to a more probable symbol and longer code corresponds to a less probable symbol. In this way, using the VLC can reduce a bit rate as compared to using codewords of an equal length for each to-be-transmitted symbol. A probability in the CABAC can be determined based on the context assigned to the symbol.

An image that is being decoded by the video decoder may be referred to as a current image in this application.

In an example, the video encoding and decoding system provided in this application may be applied to a video compression scenario, for example, a video encoding/decoding module of artificial intelligence (artificial intelligence, AI).

In another example, the video encoding and decoding system provided in this application may be configured to store a compressed video file for different services, for example, data (image or video) storage of a terminal album, video surveillance, or Huawei™ cloud.

In still another example, the video encoding and decoding system provided in this application may be configured to transmit a compressed video file, for example, Huawei™ cloud or video live (live) streaming. For example, when the video encoding and decoding system is applied to a live (live) streaming technology, a process in which the output interface 140 sends a data stream to the outside (for example, a server cluster supporting the live streaming technology) may also be referred to as stream pushing, and a process in which the server cluster sends a data stream to the input interface 240 may also be referred to as distribution.

The several examples are merely possible application scenarios of the video encoding and decoding system provided in this embodiment, and should not be construed as a limitation on this application.

In embodiments provided in this application, to reduce a data amount of a bitstream and improve a transmission speed of the bitstream between a plurality of devices, the encoder side 10 may perform encoding and image compression on an image frame in a warping manner. Correspondingly, the decoder side 20 may also perform decoding and image reconstruction on the image frame in the warping manner.

An optical flow indicates a motion speed and a motion direction of a pixel in two adjacent image frames. For example, an image domain optical flow indicates motion information of a pixel between two adjacent image frames, and the motion information may include a motion speed and a motion direction of the pixel between the two adjacent image frames. A feature domain optical flow indicates motion information between feature maps of the two adjacent image frames, and the motion information indicates a motion speed and a motion direction between a feature map of an image frame and a feature map of an adjacent image frame of the image frame. For example, an adjacent image frame (for example, an image frame 2) of a previous image frame (for example, an image frame 1) may also be referred to as a reference frame of the image frame 1.

The optical flow has two directions in a time dimension: a direction 1, which is an optical flow from a previous image frame to a next image frame; and a direction 2, which is an optical flow from the next image frame to the previous image frame. An optical flow in a direction is usually digitally indicated, for example, indicated by using a three-dimensional array [2, h, w], where "2" indicates that the optical flow includes two channels, and a first channel of the two channels indicates an offset direction and a size of an image in an $x$ direction, and a second channel indicates an offset direction and a size of the image in a *y* direction. h is a height of the image, and w is a width of the image. In the *x* direction, a positive value indicates that an object moves leftward, and a negative value indicates that the object moves rightward. In the y direction, a positive value indicates that the object moves upward, and a negative value indicates that the object moves downward.

FIG. 2 is a diagram of a mapping relationship between an optical flow and a color according to this application. An arrow in (A) in FIG. 2 shows a direction of an optical flow in an image, and a length of the arrow shows a size of the optical flow in the image. (B) in FIG. 2 shows a color and luminance that are of the image and that are determined based on the optical flow. For example, the color indicates the direction of the optical flow, and the luminance indicates the size of the optical flow. For example, higher luminance indicates a larger value corresponding to the optical flow. It should be noted that (B) in FIG. 2 describes the color of the image by using a grayscale as an example, but should not be construed as a limitation on this application. For more content of a warping relationship between the optical flow and the image, refer to related content in a common technology. Details are not described herein.

A method for predicting a current frame based on the reference frame and the optical flow between two frames is referred to as warping (Warping), and is usually indicated by $\bar{x}_t = W(x_{t-1}, v_t)$, where $\bar{x}_t$ is a predictive frame, $x_{t-1}$ is the reference frame, and $v_t$ is an optical flow from the reference frame to the predictive frame. A decoder side may infer, from the known reference frame and the optical flow, a position that is of a pixel of the current frame and that corresponds to the reference frame, and obtain an estimated value of a pixel value of the current frame by performing interpolation based on the position corresponding to the reference frame.

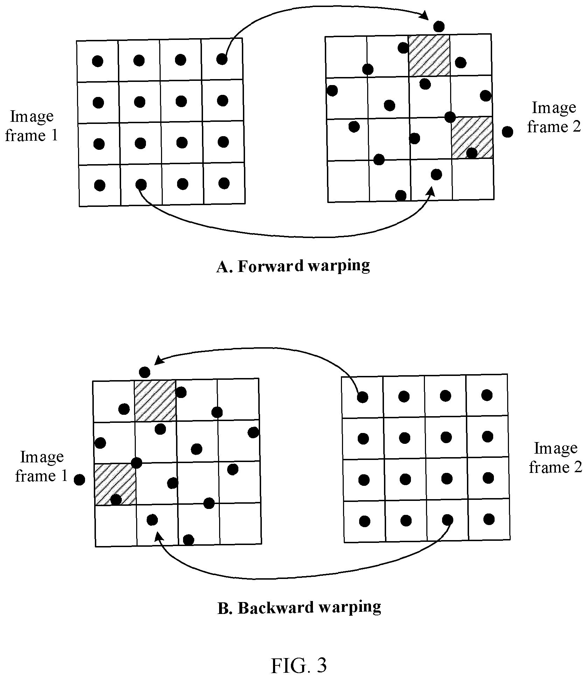

The warping includes forward warping (forward warping) and backward warping (backward warping). As shown in FIG. 3, FIG. 3 is a diagram of optical flow mapping according to this application. A in FIG. 3 is the forward mapping, and means that a decoder side predicts a next image frame (image frame 2) based on a previous image frame (image frame 1) and an optical flow between the previous and next frames. B in FIG. 3 is the backward mapping, and means that the decoder side predicts the previous image frame (the image frame 1) based on the next image frame (the image frame 2) and the optical flow between the previous and next frames.

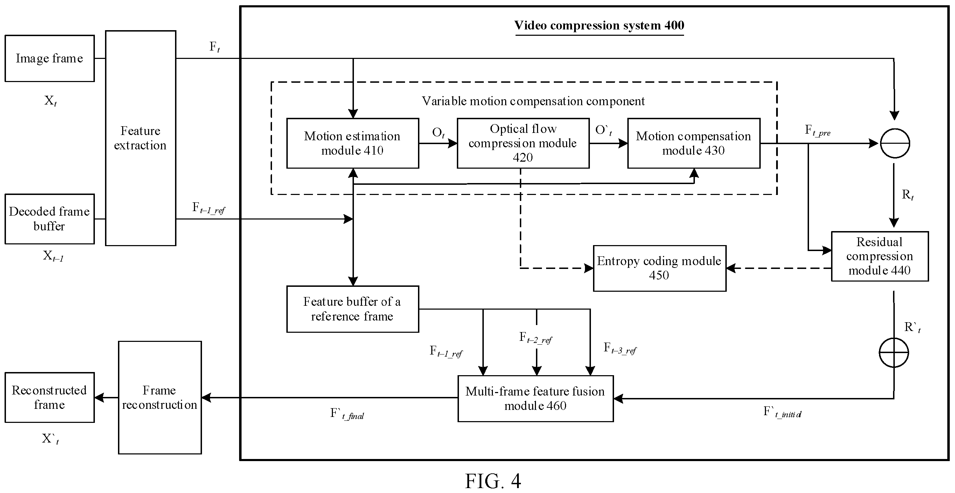

Based on FIG. 1 to FIG. 3, an embodiment of this application provides a framework towards deep video compression in feature space (framework towards deep video compression in feature space, FVC for short). FIG. 4 is a diagram of an architecture of a video compression system according to this application. The video compression system 400 includes a motion estimation (motion estimation) module 410, an optical flow compression (motion compression) module 420, a motion compensation (motion compensation) module 430, a residual compression (residual compression) module 440, an entropy coding (entropy coding) module 450, and a multi-frame feature fusion (multi-frame feature fusion) module 460. The motion estimation module 410, the optical flow compression module 420, and the motion compensation module 430 may be collectively referred to as a variable motion compensation component. After feature extraction (feature extraction) is performed on an image frame $X_t$, a feature map $F_t$ of the image frame is obtained. After the feature extraction is performed on a reference frame $X_{t-1}$, a feature map $F_{t-1}$ of the reference frame is obtained. The reference frame $X_{t-1}$ may be stored in a decoded frame buffer (decoded frame buffer), and the decoded frame buffer is used to provide data storage space of a plurality of frames.

The motion estimation module 410 determines a feature domain optical flow $O_t$ between the image frame and the reference frame based on $F_t$ and $F_{t-1}$.

The optical flow compression module 420 compresses $O_t$, to obtain a feature domain optical flow bitstream $O'_t$.

The motion compensation module 430 performs feature prediction based on the feature map $F_{t-1}$ of the reference frame and the decoded feature domain optical flow bitstream $O'_t$, to determine a predicted feature map $F_{t\_pre}$ corresponding to the image frame $X_t$.

A feature domain residual is $R_t = F_t - F_{t\_pre}$, and the residual compression module 440 outputs a compressed decoded residual $R'_t$ based on the obtained feature domain residual Rt. The predicted feature map $F_{t\_pre}$ and the decoded residual $R'_t$ may be used to determine an initial reconstructed feature $F'_{t\_initial}$ of the image frame.

Further, the multi-frame feature fusion module 460 determines, based on the initial reconstructed feature $F'_{t\_initial}$ and reconstructed feature maps ($F_{t-1\_ref}$, $F_{t-2\_ref}$, and $F_{t-3\_ref}$ shown in FIG. 4) corresponding to a plurality of reference frames, a final reconstructed feature map $F'_{t\_final}$ of the image frame Xt. After frame reconstruction (frame reconstruction) is performed on the final reconstructed feature map $F'_{t\_final}$, a reconstructed frame $X'_t$ corresponding to the image frame $X_t$ is obtained.

The entropy coding module 450 is configured to encode at least one of the feature domain optical flow $O_t$ and the feature domain residual $R_t$, to obtain a binary bitstream.

FIG. 1 to FIG. 4 are merely examples provided in this application. In some examples, the encoder side 10, the decoder side 20, the video encoder 100, the video decoder 200, and the video encoding and decoding system may include more or fewer components or units. This is not limited in this application.

The following describes specific implementations of the image encoding method provided in embodiments of this application in detail with reference to accompanying drawings.

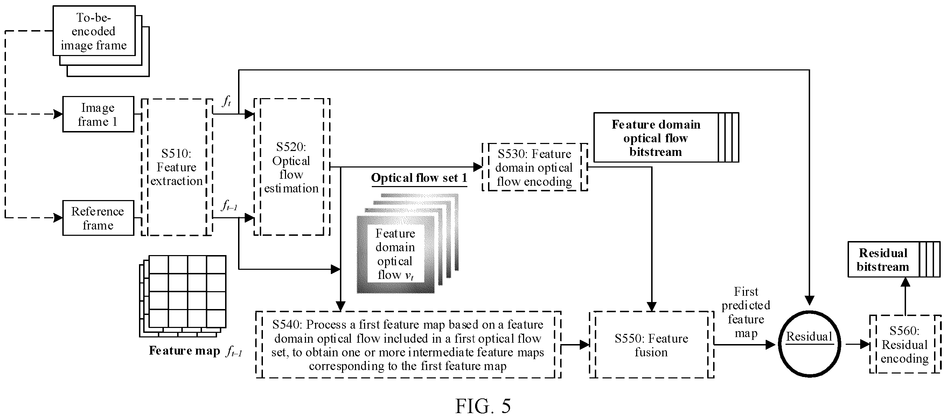

FIG. 5 is a schematic flowchart of an image encoding method according to this application. The image encoding method may be applied to the video encoding and decoding system shown in FIG. 1 or the video compression system shown in FIG. 4. For example, the image encoding method may be performed by the encoder side 10 or the video encoder 100. Herein, an example in which the encoder side 10 performs the image encoding method provided in this embodiment is used for description. As shown in FIG. 5, the image encoding method provided in this embodiment includes the following steps S510 to S560.

S510: An encoder side obtains a feature map of an image frame 1 and a first feature map of a reference frame of the image frame 1.

The image frame 1 and the reference frame may both belong to a GOP included in a video. For example, the video includes one or more image frames, the image frame 1 may be any image frame in the video, and the reference frame may be an image frame adjacent to the image frame 1 in the video. For example, the reference frame is an adjacent image frame before the image frame 1, or the reference frame is an adjacent image frame after the image frame 1. It should be noted that, in some cases, the image frame 1 may also be referred to as a first image frame.

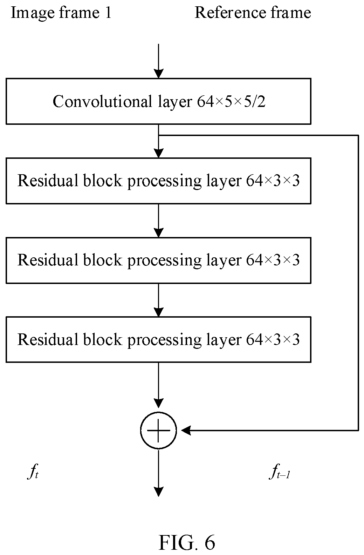

In an optional example, a manner of obtaining the feature map by the encoder side may include but is not limited to that the encoder side obtains the feature map based on a neural network model. It is assumed that a size of each image frame in the video is [3, H, W], that is, the image frame has three channels, a height being H, and a width being W; a size of a feature map corresponding to the image frame being [N, H/s, W/s], where s is a positive integer, and it is assumed that s=2 and N=64 herein, and the neural network model is a feature extraction network. A feature extraction process of the feature map of the image frame 1 and the first feature map of the reference frame in this embodiment is described. FIG. 6 is a diagram of a structure of a feature extraction network according to this application. The feature extraction network includes one convolutional layer (convolutional layer, conv) and three residual block (residual block, resblock) processing layers, a size of a convolution kernel of the convolutional layer is $64\times5\times5/2$, and a size of a convolution kernel of the resblock processing layer is $64\times3\times3$. Further, the encoder side determines that the feature map corresponding to the image frame 1 is $f_t$, and the first feature map of the reference frame is $f_{t-1}$.

It should be noted that FIG. 6 shows merely an example of a feature extraction manner provided in this embodiment, and should not be construed as a limitation on this application. When sizes of the image frame and the reference frame have other values, parameters of network layers in the feature extraction network shown in FIG. 6 may also be different. In some optional implementations, the encoder side may alternatively extract features of the image frame 1 and the reference frame in another manner. This is not limited in this application.

S520: The encoder side obtains at least one optical flow set based on the feature map of the image frame 1 and the first feature map.

A first optical flow set in the at least one optical flow set corresponds to the first feature map. For example, the first optical flow set may be an optical flow set 1 shown in FIG. 5.

The first optical flow set may include one or more feature domain optical flows vt, and the feature domain optical flow vt indicates motion information between the feature map of the image frame 1 (or referred to as the first image frame) and the first feature map. The motion information may indicate the motion information and a motion direction between the feature map of the image frame 1 and the first feature map.

In this embodiment of this application, a process in which the encoder side obtains the optical flow set is actually an optical flow estimation process. In a feasible implementation, the optical flow estimation process may be implemented by the motion estimation module 410 shown in FIG. 4, and the motion estimation module 410 may be implemented with support of the encoder side.

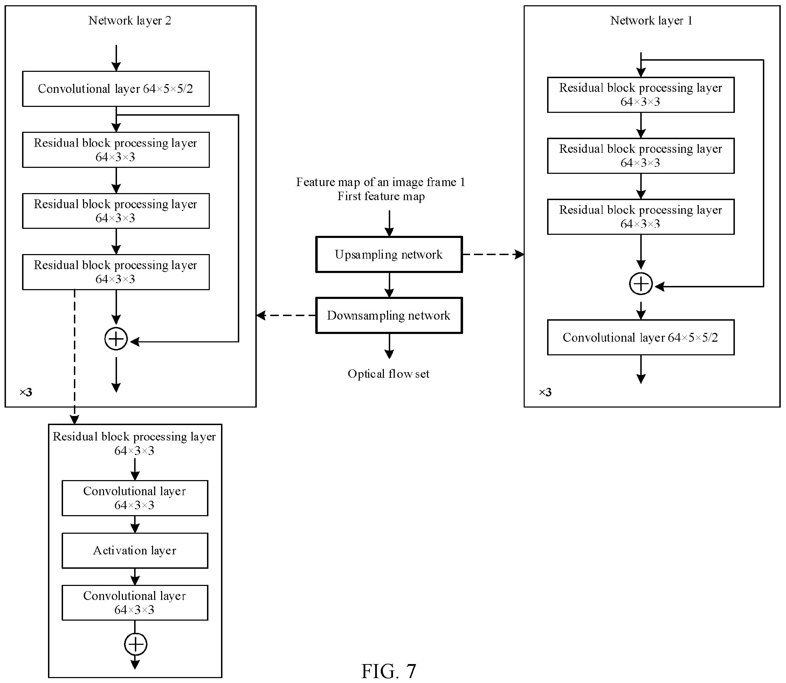

In some optional examples, the encoder side may determine the optical flow set by using an optical flow estimation network. For example, FIG. 7 is a diagram of a structure of an optical flow estimation network according to this application. The optical flow estimation network includes an upsampling network and a downsampling network. The upsampling network includes three network layers 1, and the network layer 1 sequentially includes three residual block processing layers (a size of a convolution kernel is $64\times3\times3$) and one convolutional layer (a size of a convolution kernel is $64\times5\times5/2$). The downsampling network includes three network layers 2, and the network layer 2 sequentially includes one convolutional layer (a size of a convolution kernel is $64\times5\times5/2$) and three residual block processing layers (a size of a convolution kernel is $64\times3\times3$). In an optional case, one residual block processing layer sequentially includes one convolutional layer (a size of a convolution kernel is $64\times3\times3$), one activation layer, and one convolutional layer (a size of a convolution kernel is $64\times3\times3$). The activation layer may be a rectified linear unit layer (rectified linear unit layer, ReLU), a parametric rectified linear unit (parametric rectified linear unit, PReLU), or the like.

It should be noted that FIG. 7 shows merely an example of the optical flow estimation network provided in this embodiment of this application, and should not be construed as a limitation on this application. A size of the convolution kernel of each network layer, a quantity of channels of feature maps input to the network layer, a downsampling position, a quantity of convolutional layers, and a network activation layer can all be adjusted. In some complex scenarios, the optical flow estimation network may further use a more complex network structure.

S530: The encoder side performs feature domain optical flow encoding on the optical flow set obtained in S520, to obtain a feature domain optical flow bitstream.

The feature domain optical flow bitstream includes a bitstream corresponding to the optical flow set 1.

In some cases, the feature domain optical flow bitstream may be a binary file, or the feature domain optical flow bitstream may be another type of file that complies with a multimedia transfer protocol. This is not limited.

S540: The encoder side processes the first feature map based on the feature domain optical flow included in the optical flow set 1, to obtain one or more intermediate feature maps corresponding to the first feature map.

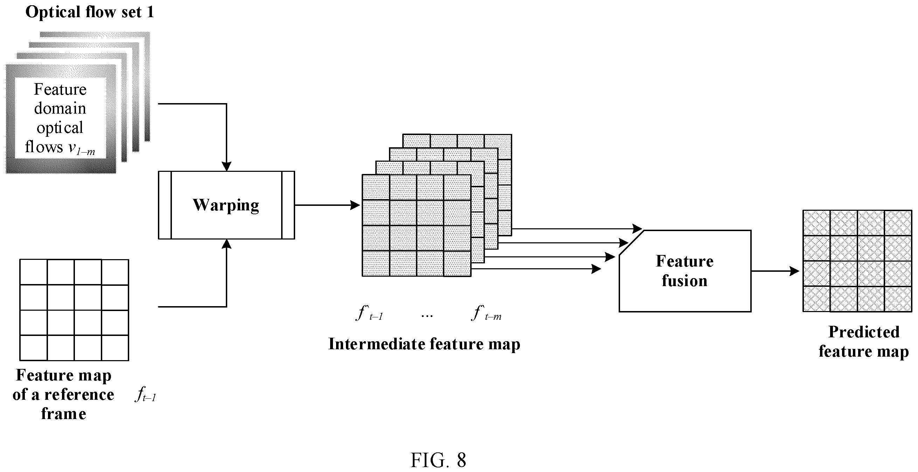

A feasible processing manner is provided herein. The encoder side performs warping (warping) on the first feature map based on a first feature domain optical flow ($v_1$) in the one or more feature domain optical flows included in the optical flow set 1, to obtain an intermediate feature map corresponding to the first feature domain optical flow. It should be noted that an intermediate feature map is obtained when warping is performed on a feature domain optical flow and the first feature map, and a quantity of intermediate feature maps corresponding to the first feature map is consistent with a quantity of feature domain optical flows included in the optical flow set 1. FIG. 8 is a schematic flowchart of warping and feature fusion according to this application. The optical flow set 1 includes a plurality of feature domain optical flows, for example, $v_1$ to $v_m$, where $m$ is a positive integer. For the first feature map $f_t$ of the reference frame, the encoder side separately performs warping on each feature domain optical flow included in the optical flow set 1 and the first feature map $f_t$ to obtain $m$ intermediate feature maps.

S550: The encoder side fuses the one or more intermediate feature maps, to obtain a first predicted feature map of the first image frame.

In a common technology, a decoder side obtains a plurality of image domain optical flows between the image frame and the reference frame, and obtains a plurality of images based on the plurality of image domain optical flows and the reference frame, to fuse the plurality of images, so as to obtain a target image corresponding to the image frame. Therefore, the decoder side needs to predict pixel values of a plurality of images for decoding an image frame, and fuses the plurality of images, to obtain a target image. As a result, computing resources required for image decoding are large, and efficiency of decoding a video by the decoder side based on an image domain optical flow is low.

By comparison, in a possible case provided in this embodiment, the encoder side inputs the one or more intermediate feature maps to a feature fusion model, to obtain the first predicted feature map. For example, the feature fusion model includes a convolutional network layer, and the convolutional network layer is used to fuse the one or more intermediate feature maps. For example, in an image decoding process, because computing resources required for feature map fusing are less than computing resources required for feature map decoding, the decoder side fuses the plurality of intermediate feature maps by using the feature fusion model. Further, the decoder side decodes the image frame based on the predicted feature map obtained by fusing the plurality of intermediate feature maps, that is, the decoder side needs to predict, based on the predicted feature map, only a pixel value of an image position indicated by the predicted feature map in the image, and does not need to predict all pixel values of the plurality of images. This reduces the computing resources required for image decoding, and improves image decoding efficiency.

In another possible case provided in this embodiment, the encoder side obtains one or more weight values of the one or more intermediate feature maps, processes, based on the one or more weight values, the one or more intermediate feature maps corresponding to the one or more weight values respectively, and adds all processed intermediate feature maps, to obtain the first predicted feature map. The weight value indicates a weight occupied by the intermediate feature map in the first predicted feature map.

In this embodiment, for the plurality of intermediate feature maps corresponding to the first feature map, weight values of the intermediate feature maps may be different. In other words, the encoder side may set different weight values for the intermediate feature maps based on image encoding requirements. For example, if images corresponding to some intermediate feature maps are blurry, weight values of the intermediate feature maps corresponding to the blurry images are reduced, thereby improving definition of a first image.

For example, the weight value may be a mask value corresponding to each optical flow. It is assumed that the optical flow set 1 includes nine feature domain optical flows, and weight values of the feature domain optical flows are sequentially: $m_t^1, m_t^2 \dots, m_t^9$. For example, a size of the feature domain optical flow is [2, H/s, W/s], and a mask value is [1, H/s, W/s]. Further, the encoder side fuses intermediate feature maps corresponding to the nine feature domain optical flows, to obtain the first predicted feature map corresponding to the first feature map.

The two possible cases are merely examples provided in this embodiment, and it should not be understood as that only the two manners can be used for feature map fusion in this application. As shown in FIG. 8, it is assumed that m=4. For the first feature map $f_t$ of the reference frame, the encoder side may separately perform warping on each feature domain optical flow included in the optical flow set 1 and the first feature map $ft$, to obtain four intermediate feature maps. Further, the encoder side performs feature fusion on the four intermediate feature maps, to obtain the first predicted feature map.

Still refer to FIG. 5. The image encoding method provided in this embodiment further includes the following step S560.

S560: The encoder side encodes, based on the first predicted feature map, a residual corresponding to the image frame 1, to obtain a residual bitstream.

A residual bitstream of an image region corresponding to the first predicted feature map and the feature domain optical flow bitstream determined in S530 may be collectively referred to as a bitstream corresponding to the image frame 1 (or referred to as the first image frame).

Optionally, the bitstream includes the feature domain optical flow bitstream corresponding to the optical flow set, and the residual bitstream of the image region corresponding to the first predicted feature map.

In this embodiment, for the reference frame of the first image frame (for example, the image frame 1), the encoder side determines a group of feature domain optical flows (for example, the optical flow set 1) based on the feature map of the first image frame and the first feature map of the reference frame, and processes the first feature map of the reference frame, to obtain the one or more intermediate feature maps. Next, after obtaining the one or more intermediate feature maps corresponding to the first feature map, the encoder side fuses the one or more intermediate feature maps, to obtain the first predicted feature map corresponding to the first image frame. Finally, the encoder side encodes the first image frame based on the first predicted feature map, to obtain the bitstream.

In this way, for a single feature domain optical flow, a pixel error in the feature domain optical flow is less than a pixel error in the image domain optical flow. Therefore, an encoding error caused by the intermediate feature map determined by the encoder side based on the feature domain optical flow is less than an encoding error caused by an image domain optical flow in the common technology. In other words, the encoder side encodes the image frame based on the feature domain optical flow, thereby reducing an encoding error caused by an image domain optical flow between two adjacent image frames, and improving accuracy of image encoding. In addition, the encoder side processes the feature map of the reference frame based on the plurality of feature domain optical flows, to obtain the plurality of intermediate feature maps, and fuses the plurality of intermediate feature maps, to determine the predicted feature map of the image frame. In other words, the encoder side fuses the plurality of intermediate feature maps determined by the optical flow set and the feature map of the reference frame, to obtain the predicted feature map of the image frame. The predicted feature map includes more image information, so that when the encoder side encodes the image frame based on the predicted feature map obtained through fusion, a problem that it is difficult for a single intermediate feature map to accurately express the first image is avoided, and the accuracy of the image encoding and image quality (for example, image definition) are improved.

In an optional implementation, the reference frame may correspond to a plurality of feature maps, for example, the first feature map and a second feature map. For example, the first feature map and the second feature map may be two feature maps that belong to different channels in a plurality of channels included in the reference frame.

In this embodiment of this application, a group of feature maps corresponding to the reference frame may correspond to an optical flow set. For example, the optical flow set 1 may further correspond to the second feature map. With reference to the content shown in FIG. 8, if a feature map $f_{t-1}$ of the reference frame is the second feature map, the encoder side may further process the second feature map based on the feature domain optical flow included in the optical flow set 1, to obtain one or more intermediate feature maps (for example, $f'_{t-1}$ to $f'_{t-m}$ shown in FIG. 8, where m is a positive integer) corresponding to the second feature map. In addition, the encoder side further fuses the one or more intermediate feature maps corresponding to the second feature map, to obtain a second predicted feature map of the first image frame.

Because the reference frame corresponds to the plurality of feature maps, for example, the first feature map and second feature map, a process in which the encoder side encodes the first image frame may include the following content: The encoder side encodes the first image frame based on the first predicted feature map and the second predicted feature map, to obtain the bitstream. The bitstream may include residual bitstreams of image regions that are in the first image frame and that correspond to the first feature map and the second feature map, and the feature domain optical flow bitstream corresponding to the optical flow set 1.

For example, it is assumed that every eight feature maps of the reference frame share nine feature domain optical flows, and the eight feature maps are considered as a feature map group. In an image encoding process, the eight feature maps belonging to the same group may share the nine feature domain optical flows, and in this case, $8 \times 9 = 72$ intermediate feature maps are obtained. Further, in a process in which the encoder side performs the feature fusion on the intermediate feature maps, nine intermediate feature maps corresponding to one feature map are fused, to obtain a predicted feature map corresponding to the one feature map. It should be noted that, in this application, a quantity of feature maps and a quantity of feature domain optical flows shared by the feature maps are not limited, and whether quantities of feature channels in all feature map groups are consistent is not limited either.

In this embodiment, the plurality of feature maps (or referred to as a group of feature maps or a feature map group) of the reference frame may correspond to an optical flow set (or referred to as a group of feature domain optical flows). For example, a plurality of feature maps belonging to a same group share a group of feature domain optical flows, and the encoder side processes a feature map based on a group of feature domain optical flows corresponding to the feature map, to obtain an intermediate feature map corresponding to the feature map. Further, the encoder side fuses the intermediate feature map corresponding to the feature map, to obtain a predicted feature map corresponding to the feature map. Finally, the encoder side encodes the image frame based on predicted feature maps corresponding to all feature maps of the reference frame, to obtain a target bitstream.

In this way, in the image encoding process, if the reference frame corresponds to a plurality of feature maps, the encoder side may divide the plurality of feature maps into one or more groups, and feature maps belonging to a same group share an optical flow set. The encoder side fuses intermediate feature maps corresponding to the feature maps, to obtain a predicted feature map. This avoids a problem that when the reference frame or the image frame has much information, the bitstream obtained by the encoder side through encoding based on the feature map has a large amount of redundancy and low precision, and improves the accuracy of the image encoding. It should be noted that quantities of channels of feature maps belonging to different groups may be different.

In an optional implementation, when the reference frame corresponds to the plurality of feature maps, and the plurality of feature maps correspond to a group of feature domain optical flows, for different feature maps of the reference frame, the encoder side may fuse, in different feature fusion manners, the intermediate feature maps corresponding to the feature maps of the reference frame, to obtain the predicted feature maps corresponding to the feature maps of the reference frame. For example, the reference frame corresponds to a feature map 1 and a feature map 2, and the encoder side inputs a plurality of intermediate feature maps corresponding to the feature map 1 to the feature fusion model, to determine a predicted feature map corresponding to the feature map 1. The encoder side obtains weight values of intermediate feature maps corresponding to the feature map 2, and processes, based on the weight values, the intermediate feature maps corresponding to the weight values respectively, to obtain a predicted feature map corresponding to the feature map 2. In this embodiment, for the different feature fusion manners, when image encoding requirements are different, the encoder side may set confidence for a predicted feature map output in each feature fusion manner, to meet different encoding requirements of a user.

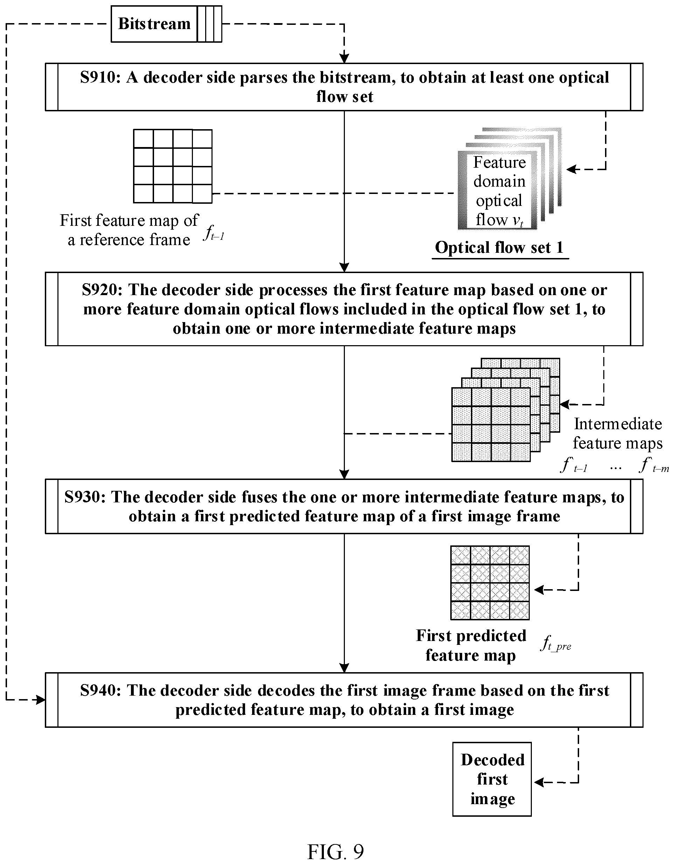

Corresponding to the image encoding method provided in the foregoing embodiment, to decode the bitstream including the residual bitstream and the feature domain optical flow bitstream, to obtain a target image or video corresponding to the bitstream, an embodiment of this application further provides an image decoding method. FIG. 9 is a schematic flowchart 1 of an image decoding method according to this application. The image decoding method may be applied to the video encoding and decoding system shown in FIG. 1 or the video compression system shown in FIG. 4. For example, the image encoding method may be performed by the decoder side 20 or the video decoder 200. Herein, an example in which the decoder side 20 performs the image decoding method provided in this embodiment is used for description.

As shown in FIG. 9, the image decoding method provided in this embodiment includes the following steps S910 to S940.

S910: A decoder side parses a bitstream, to obtain at least one optical flow set.

The at least one optical flow set includes a first optical flow set (an optical flow set 1 shown in FIG. 9), the optical flow set 1 corresponds to a first feature map of a reference frame, the optical flow set 1 includes one or more feature domain optical flows, and any one of the one or more feature domain optical flows indicates motion information between a feature map of a first image frame and the first feature map. For more content about the optical flow set and the feature domain optical flow, refer to the related descriptions of S510. Details are not described herein again. Optionally, the reference frame may be an image frame (an image frame before the first image frame or an image frame after the first image frame) that is decoded by the decoder side and that is adjacent to the first image frame, or the reference frame is an image frame that is carried in the bitstream and that includes complete information of an image.

S920: The decoder side processes the first feature map based on the feature domain optical flow included in the optical flow set 1, to obtain one or more intermediate feature maps corresponding to the first feature map.

It should be noted that a process in which the decoder side processes the feature map of the reference frame based on the feature domain optical flow is also referred to as feature align, feature prediction, or feature align. This is not limited in this application.

Corresponding to the process in which the encoder side processes the feature map of the reference frame based on the optical flow set 1 in S520, the decoder side may also process the first feature map in a manner the same as that in S520, to obtain the one or more intermediate feature maps corresponding to the first feature map. For example, the decoder side performs warping on the first feature map based on a group of feature domain optical flows. For example, the decoder side may perform interpolation based on positions of the group of feature domain optical flows corresponding to the reference frame, to obtain a predicted value of a pixel value in a first image. This avoids that the decoder side needs to predict all pixel values of the first image based on an image domain optical flow, reduces a computing amount required by the decoder side to perform image decoding, and improves image decoding efficiency. S930: The decoder side fuses the one or more intermediate feature maps determined in S920, to obtain a first predicted feature map of the first image frame.

Corresponding to S550 performed by the encoder side, the decoder side may input, to a feature fusion model, the one or more intermediate feature maps determined in S920, to obtain the first predicted feature map. For example, the feature fusion model includes a convolutional network layer, and the convolutional network layer is used to fuse the one or more intermediate feature maps. In an image decoding process, because computing resources required for feature map fusing are less than computing resources required for feature map decoding, the decoder side fuses the plurality of intermediate feature maps by using the feature fusion model. Further, the decoder side decodes the image frame based on the predicted feature map obtained by fusing the plurality of intermediate feature maps. This reduces the computing resources required for the image decoding, and improves the image decoding efficiency. Alternatively, the decoder side may further obtain one or more weight values of the one or more intermediate feature maps, where one intermediate feature map corresponds to one weight value. The decoder side processes, based on the weight value of the intermediate feature map, the intermediate feature map, and adds all processed intermediate feature maps, to obtain the first predicted feature map. The weight value indicates a weight occupied by the intermediate feature map in the first predicted feature map. In this embodiment, for the plurality of intermediate feature maps corresponding to the first feature map, weight values of the intermediate feature maps may be different. In other words, the decoder side may set different weight values for the intermediate feature maps based on an image decoding requirement. For example, if images corresponding to some intermediate feature maps are blurry, weight values of the intermediate feature maps are reduced, thereby improving definition of the first image. For the weight value of the intermediate feature map, refer to the related content in S550. Details are not described herein again.

S940: The decoder side decodes the first image frame based on the first predicted feature map determined in S930, to obtain the first image.

For example, if a residual corresponding to the first predicted feature map in the bitstream is $r'_t$ and the first predicted feature map is $f'_t$ a reconstructed feature map $f\_res$ required for decoding the first image frame by the decoder side is equal to $f'_t + r'_t$, and the decoder side may decode the first image frame based on the reconstructed feature map $f\_res$, to obtain the first image.

In this embodiment, for the reference frame of the first image frame, the decoder side processes the first feature map of the reference frame based on a group of feature domain optical flows (for example, the first optical flow set) corresponding to the first image frame, to obtain the one or more intermediate feature maps. Next, after obtaining the one or more intermediate feature maps corresponding to the first feature map, the decoder side fuses the one or more intermediate feature maps, to obtain the first predicted feature map corresponding to the first image frame. Finally, the decoder side decodes the first image frame based on the first predicted feature map, to obtain the first image.

In this way, for a single feature domain optical flow, a pixel error in the feature domain optical flow is less than a pixel error in the image domain optical flow. Therefore, a decoding error caused by the intermediate feature map determined by the decoder side based on the feature domain optical flow is less than a decoding error caused by an image domain optical flow in a common technology. In other words, the decoder side decodes the image frame based on the feature domain optical flow, thereby reducing a decoding error caused by an image domain optical flow between two adjacent image frames, and improving accuracy of the image decoding.

In addition, the decoder side processes the feature map of the reference frame based on the plurality of feature domain optical flows, to obtain the plurality of intermediate feature maps, and fuses the plurality of intermediate feature maps, to determine the predicted feature map of the image frame. In other words, the decoder side fuses the plurality of intermediate feature maps determined by the optical flow set and the feature map of the reference frame, to obtain the predicted feature map of the image frame. The predicted feature map includes more image information. In this way, when the decoder side decodes the image frame based on the predicted feature map obtained through fusion, a problem that it is difficult for a single intermediate feature map to accurately express the first image is avoided, and the accuracy of the image decoding and image quality (for example, image definition) are improved.

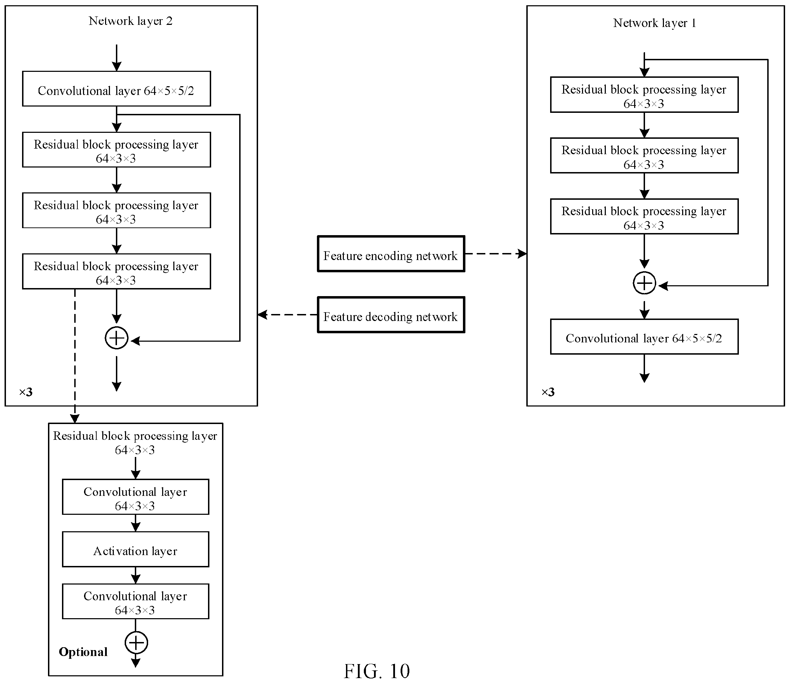

Optionally, the encoder side can encode the feature map by using a feature encoding network, and the decoder side can encode the bitstream corresponding to the feature map by using a feature decoding network. For example, for the feature encoding network required by the encoder side and the feature decoding network required by the decoder side, a possible embodiment is provided herein. FIG. 10 is a diagram of structures of a feature encoding network and a feature decoding network according to this application. The feature encoding network includes three network layers 1, and the network layer 1 sequentially includes three residual block processing layers (a size of a convolution kernel is $64 \times 3 \times 3$) and one convolutional layer (a size of a convolution kernel is $64 \times 5 \times 5/2$).

The feature decoding network includes three network layers 2, and the network layer 2 sequentially includes one convolutional layer (a size of a convolution kernel is $64 \times 5 \times 5/2$) and three residual block processing layers (a size of a convolution kernel is $64 \times 3 \times 3$).

In an optional case, one residual block processing layer sequentially includes one convolutional layer (a size of a convolution kernel is 64×3×3), one activation layer, and one convolutional layer (a size of a convolution kernel is 64×3×3). The activation layer may be a ReLU layer, a PReLU, or the like.

It should be noted that FIG. 10 shows merely an example of the feature encoding network and the feature decoding network provided in this embodiment of this application, and should not be construed as a limitation on this application. A size of the convolution kernel of each network layer, a quantity of channels of feature maps input to the network layer, a downsampling position, a quantity of convolutional layers, and a network activation layer can all be adjusted. In some complex scenarios, an optical flow estimation network may further use a more complex network structure. In an optional implementation, the reference frame may correspond to a plurality of feature maps, for example, the first feature map and a second feature map.

In this embodiment of this application, a group of feature maps corresponding to the reference frame may correspond to an optical flow set. For example, the optical flow set 1 may further correspond to the second feature map of the reference frame. With reference to the content shown in FIG. 8, if a feature map $f_{t-1}$ of the reference frame is the second feature map, the decoder side may further process the second feature map based on the feature domain optical flow included in the optical flow set 1, to obtain one or more intermediate feature maps (for example, $f'_{t-1}$ to $f'_{t-m}$ shown in FIG. 8, where m is a positive integer) corresponding to the second feature map. In addition, the decoder side further fuses the one or more intermediate feature maps corresponding to the second feature map, to obtain a second predicted feature map of the first image frame.

Because the reference frame corresponds to the plurality of feature maps, for example, the first feature map and second feature map, a process in which the decoder side decodes the first image frame may include the following content: The decoder side decodes the first image frame based on the first predicted feature map and the second predicted feature map, to obtain the first image. For example, it is assumed that every eight feature maps of the reference frame share nine feature domain optical flows, and the eight feature maps are considered as a feature map group. In the image decoding process, the eight feature maps belonging to the same group may share the nine feature domain optical flows, and in this case, 8×9=72 intermediate feature maps are obtained. Further, in a process in which the decoder side performs feature fusion on the intermediate feature maps, the nine intermediate feature maps corresponding to one feature map are fused, to obtain a predicted feature map corresponding to the one feature map. It should be noted that quantities of channels of feature maps belonging to different groups may be different.

In this embodiment, the plurality of feature maps (or referred to as a group of feature maps) of the reference frame may correspond to an optical flow set (or referred to as a group of feature domain optical flows). In other words, a plurality of feature maps belonging to a same group share a group of feature domain optical flows, and the decoder side processes a feature map based on a group of feature domain optical flows corresponding to the feature map, to obtain an intermediate feature map corresponding to the feature map. Further, the decoder side fuses the intermediate feature map corresponding to the feature map, to obtain a predicted feature map corresponding to the feature map. Finally, the decoder side decodes the image frame based on predicted feature maps corresponding to all feature maps of the reference frame, to obtain a target image. In this way, in the image decoding process, if the reference frame corresponds to a plurality of feature maps, the decoder side may divide the plurality of feature maps into one or more groups, and feature maps belonging to a same group share an optical flow set. The decoder side fuses intermediate feature maps corresponding to the feature maps, to obtain a predicted feature map. This avoids a problem that when the reference frame or the image frame has much information, the decoder side reconstructs the image based on the feature map with low precision, and improves the accuracy of the image decoding.

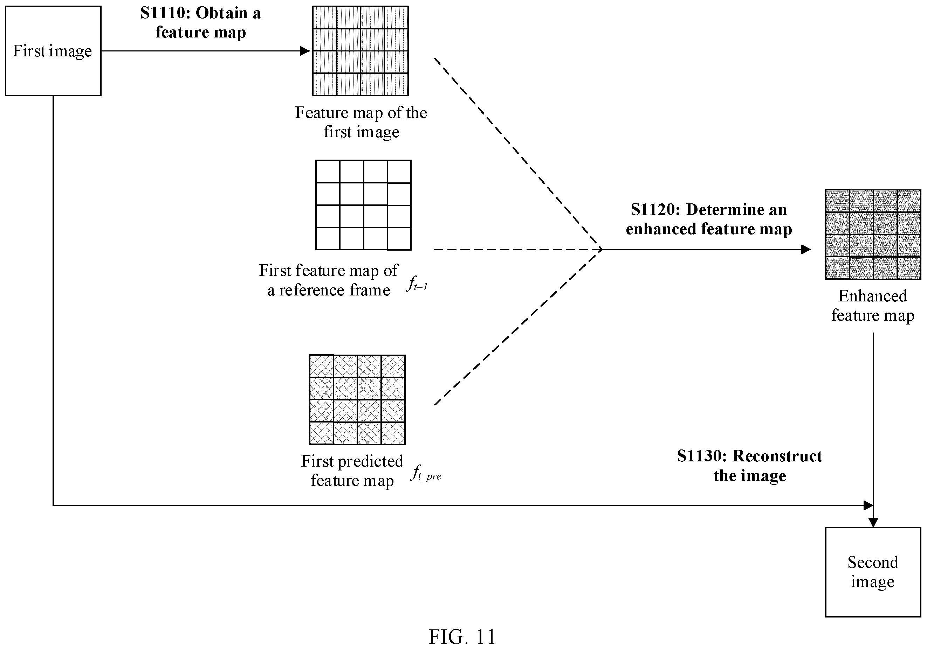

In some cases, if definition of the first image does not reach expected definition, the decoded first image is blurry. To improve the definition of the first image and improve video display effect, an embodiment of this application further provides a video enhancement technical solution. FIG. 11 is a schematic flowchart 2 of an image decoding method according to this application. The image decoding method shown in FIG. 11 may be combined with the image encoding method and the image decoding method provided in the foregoing embodiments, or may be implemented separately. Herein, an example in which a decoder side performs the image decoding method shown in FIG. 11 is used for description. As shown in FIG. 11, the image decoding method provided in this embodiment includes the following steps S1110 to S1130.

S1110: The decoder side obtains a feature map of a first image.

For example, the decoder side may obtain the feature map of the first image based on the feature extraction network shown in FIG. 6. Details are not described herein again.

S1120: The decoder side obtains an enhanced feature map based on the feature map of the first image, a first feature map of a reference frame, and a first predicted feature map.

For example, the decoder side may fuse, by using a feature fusion model, a plurality of feature maps included in S1120, to obtain the enhanced feature map. The feature fusion model may be the feature fusion model provided in S550 or S930, or may be another model including a convolutional layer. For example, a size of a convolution kernel of the convolutional layer is 3×3. This is not limited in this application.

In some possible cases, the decoder side may further set different weight values for the feature map of the first image, the first feature map of the reference frame, and the first predicted feature map, to fuse the plurality of feature maps to obtain the enhanced feature map.

In some possible examples, the enhanced feature map may be used to determine an enhancement layer image of the first image. Video quality of the enhancement layer image is higher than video quality of the first image, and the video quality may be or include at least one of a signal-to-noise ratio (signal-to-noise ratio, SNR), a resolution (image resolution), and a peak signal-to-noise ratio (peak signal-to-noise ratio, PSNR) of an image. In this specification, video quality for one image frame may be referred to as image quality of the image.

The image signal-to-noise ratio is a ratio of an average signal value of an image to a background standard deviation. For an image, the "average signal value" herein is usually an average grayscale value of the image, the background standard deviation may be indicated by a variance of background signal values of the image, and the variance of the background signal values is noise power. For the image, a larger image signal-to-noise ratio indicates better image quality. The resolution is a quantity of pixels per unit area of a single image frame. A higher image resolution indicates better image quality. The PSNR indicates subjective quality of the image. A larger PSNR indicates better image quality. For more content about the SNR, the resolution, and the PSNR, refer to related descriptions in the conventional technology. Details are not described herein.

S1130: The decoder side processes the first image based on the enhanced feature map, to obtain a second image. Content indicated by the second image is the same as that indicated by the first image, but definition of the second image is higher than definition of the first image. In some embodiments, the definition of the image may be indicated by the peak signal-to-noise ratio (PSNR).

In this embodiment, the decoder side may fuse the feature map of the first image, the first feature map, and the first predicted feature map, and perform video enhancement processing on the first image based on the enhanced feature map obtained through fusion, to obtain the second image with better definition. This improves definition of a decoded image and image display effect.

Optionally, that the decoder side processes the first image based on the enhanced feature map, to obtain a second image includes: The decoder side obtains the enhancement layer image of the first image based on the enhanced feature map, and reconstructs the first image based on the enhancement layer image, to obtain the second image. For example, the enhancement layer image may be an image determined by the decoder side based on the reference frame and the enhanced feature map, and the decoder side adds a part or all of information of the enhancement layer image on the basis of the first image, to obtain the second image. Alternatively, the decoder side uses the enhancement layer image as a reconstructed image of the first image, namely, the second image. In this example, the decoder side obtains the plurality of feature maps of the image at different stages, and obtains the enhanced feature map determined by the plurality of feature maps, to reconstruct the first image and perform video enhancement based on the enhanced feature map. This improves the definition of the decoded image and the image display effect.

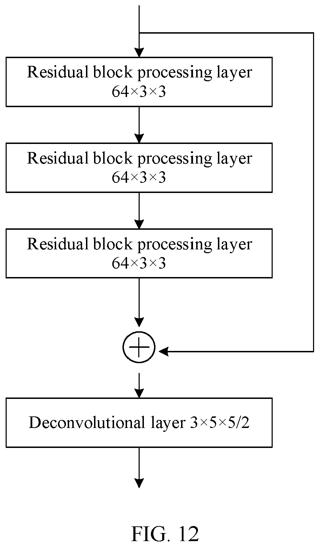

In a possible case, the decoder side may reconstruct the first image based on an image reconstruction network. FIG. 12 is a diagram of a structure of an image reconstruction network according to this application. The image reconstruction network sequentially includes three residual block processing layers (a size of a convolution kernel is 64×3×3) and one deconvolutional layer (a size of a convolution kernel is 3×5×5/2). The residual block processing layer may include one convolutional layer (a size of a convolution kernel is 64×3×3), one activation layer, and one convolutional layer (a size of a convolution kernel is 64×3×3).

It may be understood that the networks shown in FIG. 6, FIG. 7, FIG. 10, and FIG. 12 are described in embodiments by using an example in which the size of the image frame is [3, H, W], and should not be construed as a limitation on this application. For example, if the size of the image frame changes, parameters of the convolutional layer, the residual block processing layer, and the deconvolutional layer in the networks also change based on requirements of video encoding and decoding, video enhancement, and the like. This is not limited in this application.

In embodiments of this application, the encoder side/decoder side obtains the predicted feature map based on the intermediate feature map determined by performing the warping on the feature map of the reference frame. In some cases, the encoder side/decoder side may also process the feature map based on a deformable network (deformable convolutional network, DCN), and the DCN is implemented based on convolution. The following is a mathematical expression of convolution:

$$F(p) = \sum_{k=1}^{n^2} w(p_k) * F(p + p_k)$$

where n is a size of a convolution kernel, w is a weight of the convolution kernel, F is an input feature map (input feature map), p is a convolution position, and $p_k$ is an enumerated value of a position relative to p in the convolution kernel. The DCN learns an offset (offset) based on a network, so that the convolution kernel is offset at a sampling point of the input feature map and is concentrated in a region of interest (region of interest, ROI) or a target region. A mathematical expression of the DCN is as follows:

$$F(p) = \sum_{k=1}^{n^2} w(p_k) * F(p + p_k + \Delta p_k)$$

In addition, a mathematical expression with mask is as follows:

$$F(p) = \sum_{k=1}^{n^2} m(p_k) * w(p_k) * F(p + p_k + \Delta p_k)$$

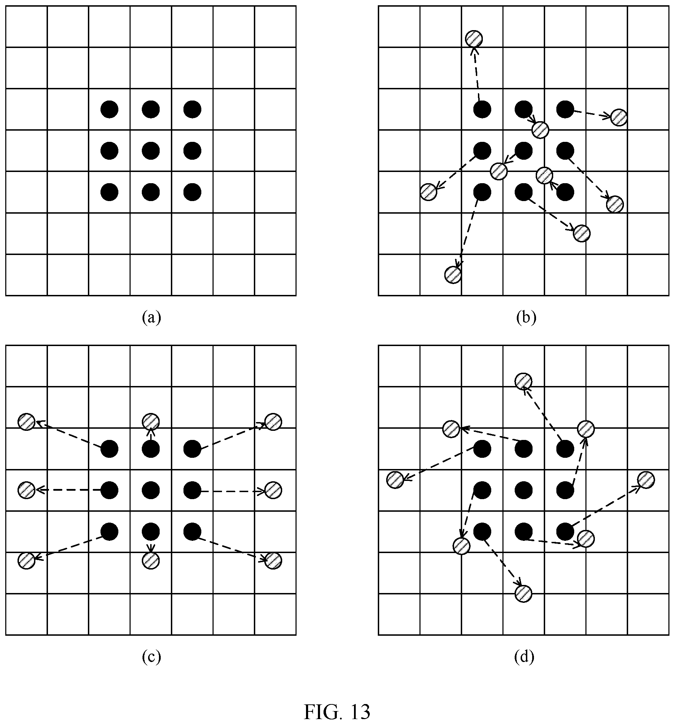

where $\Delta p_k$ is an offset relative to $p_k$. In this way, a convolutional sampling position becomes an irregular position, and $m(p_k)$ indicates that a mask value of the position $p_k$ is a penalty term for the position $p_k$. FIG. 13 shows a convolution operation in which a central point is obtained through convolution by using points in neighborhoods. (a) shows a common sampling manner of a $3 \times 3$ convolution kernel, (b) is changes of sampling points after offsets are added to deformable convolution that is sampled, and (c) and (d) are special forms of the deformable convolution. For example, after a plurality of pixels in (c) are scaled, predicted pixel values of corresponding positions in a target image are obtained. For another example, after a plurality of pixels in (d) are rotated and scaled, predicted pixel values of corresponding positions in a target image are obtained.

If the feature domain optical flow is set to the offset $\Delta p_k$ in the expression, the image encoding method and the image decoding method provided in embodiments of this application may also be implemented by the DCN. It may be understood that when the reference frame corresponds to different feature maps of a plurality of channels, a same DCN processing manner or different DCN processing manners may be used for each feature map, for example, the four possible DCN processing manners shown in FIG. 13.

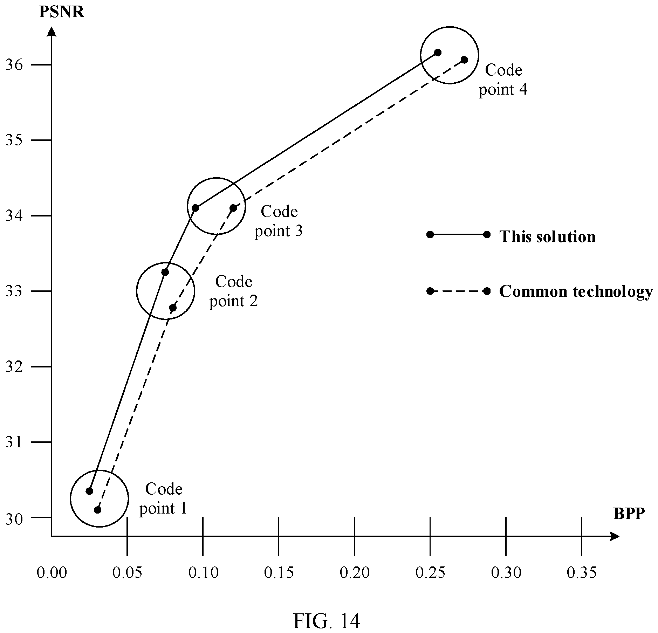

For video enhancement processes provided in the common technology and this solution, FIG. 14 is a diagram of efficiency comparison according to this application. FIG. 14 provides two indicators to compare the technical solution provided in this application with the common technology. The two indicators are a PSNR and a quantity of bits per pixel (bits per pixel, BPP). BPP is a quantity of bits used to store each pixel, and BPP also indicates a resolution of an image.

Refer to FIG. 14. It can be learned that in a plurality of code points (encoding or decoding node positions), BPPs in a solution provided in the common technology are higher than those in the technical solution provided in embodiments of this application. In other words, a bitstream generated in the common technology occupies larger storage space, and a network bandwidth required for transmitting the bitstream is larger. However, PSNRs in the solution provided in the common technology are lower than those in the technical solution provided in embodiments of this application. In other words, in the technical solution provided in embodiments of this application, subjective quality of a video (or an image) obtained after bitstream decoding is better.

For example, for an image frame with a resolution of 1080p (1920×1080), in the technical solution in the common technology, end-to-end time for testing the image frame is 0.3206 seconds (second, s). However, in the technical solution provided in embodiments of this application, the end-to-end time for testing the image frame is 0.2188s. In other words, in video encoding and decoding processes, the technical solution provided in embodiments of this application can save a bit rate (embodied by the BPP), ensure quality (embodied by the PSNR), and reduce delays of encoding and decoding a single image frame, thereby improving overall efficiency of video encoding and decoding. It should be noted that the image encoding method and the image decoding method provided in this application may be applied to scenarios such as video encoding and decoding, video enhancement, and video compression, and may be further applied to all video processing technology fields that require video inter-frame feature fusion or feature alignment, such as video prediction, video frame interpolation, and video analysis.

It may be understood that, to implement the functions in the foregoing embodiments, the encoder side and the decoder side each include a corresponding hardware structure and/or a corresponding software module for performing each function. A person skilled in the art should be easily aware that, with reference to units and method steps of the examples described in embodiments disclosed in this application, this application can be implemented by using hardware or a combination of hardware and computer software. Whether a function is performed by hardware or hardware driven by computer software depends on particular application scenarios and design constraints of the technical solutions.

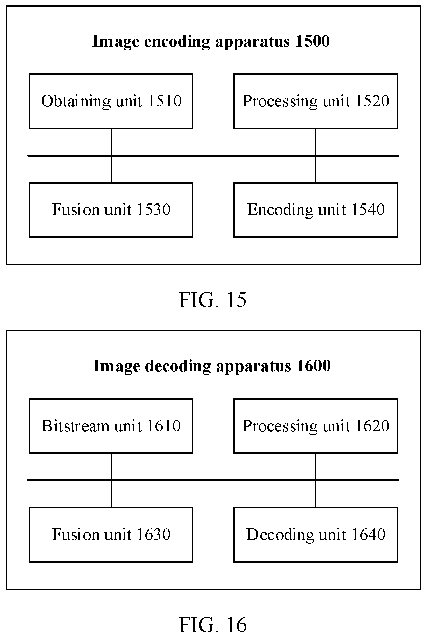

FIG. 15 is a diagram of a structure of an image encoding apparatus according to this application. The image encoding apparatus may be configured to implement the functions of the encoder side or the video encoder in the foregoing method embodiments, and therefore can also implement beneficial effect of the foregoing image encoding method embodiments. In this embodiment of this application, the image encoding apparatus may be the encoder side 10 or the video encoder 100 shown in FIG. 1, or may be a module (for example, a chip) used in the encoder side 10 or the video encoder 100.

As shown in FIG. 15, the image encoding apparatus 1500 includes an obtaining unit 1510, a processing unit 1520, a fusion unit 1530, and an encoding unit 1540. The image encoding apparatus 1500 is configured to implement the functions of the encoder side or the video encoder in the foregoing method embodiments shown in FIG. 5 and FIG. 8. When the image encoding apparatus 1500 is configured to implement the method embodiment shown in FIG. 5, the obtaining unit 1510 is configured to perform S510, the processing unit 1520 is configured to perform S520 and S540, the fusion unit 1530 is configured to perform S550, and the encoding unit 1540 is configured to perform S530 and S560.

When the image encoding apparatus 1500 is configured to implement the method embodiment shown in FIG. 8, the processing unit 1520 and the fusion unit 1530 are configured to implement the functions of warping and feature fusion. For more detailed descriptions of the obtaining unit 1510, the processing unit 1520, the fusion unit 1530, and the encoding unit 1540, directly refer to the related descriptions in the method embodiments shown in FIG. 5 and FIG. 8. Details are not described herein.

Correspondingly, an embodiment of this application further provides an image decoding apparatus. FIG. 16 is a diagram of a structure of an image decoding apparatus according to this application. The image decoding apparatus may be configured to implement the functions of the decoder side or the video decoder in the foregoing method embodiments, and therefore can also implement beneficial effect of the foregoing image decoding method embodiments. In this embodiment of this application, the image decoding apparatus may be the decoder side 20 or the video decoder 200 shown in FIG. 1, or may be a module (for example, a chip) used in the decoder side 20 or the video decoder 200.

As shown in FIG. 16, the image decoding apparatus 1600 includes a bitstream unit 1610, a processing unit 1620, a fusion unit 1630, and a decoding unit 1640. The image decoding apparatus 1600 is configured to implement the functions of the decoder side or the video decoder in the foregoing method embodiments shown in FIG. 8 and FIG. 9. When the image decoding apparatus 1600 is configured to implement the method embodiment shown in FIG. 8, the processing unit 1620 and the fusion unit 1630 are configured to implement the functions of warping and feature fusion. When the image decoding apparatus 1600 is configured to implement the method embodiment shown in FIG. 9, the bitstream unit 1610 is configured to perform S910, the processing unit 1620 is configured to perform S920, the fusion unit 1630 is configured to perform S930, and the decoding unit 1640 is configured to perform S940.

In some optional cases, the image decoding apparatus 1600 may further include an enhancement unit, and the enhancement unit is configured to process a first image based on an enhanced feature map, to obtain a second image. In a possible specific example, the enhancement unit is specifically configured to: obtain an enhancement layer image of the first image based on the enhanced feature map; and reconstruct the first image based on the enhancement layer image, to obtain the second image.

For more detailed descriptions of the bitstream unit 1610, the processing unit 1620, the fusion unit 1630, the decoding unit 1640, and the enhancement unit, directly refer to the related descriptions in the method embodiments shown in FIG. 8 and FIG. 9. Details are not described herein.

When the image encoding (or image decoding) apparatus implements, by using software, the image encoding (or image decoding) method shown in any one of the foregoing accompanying drawings, the image encoding (or image decoding) apparatus and units of the image encoding (or image decoding) apparatus may also be software modules. A processor invokes the software module to implement the foregoing image encoding (or image decoding) method. The processor may be a central processing unit (central processing unit, CPU), an application-specific integrated circuit (application-specific integrated circuit, ASIC) implementation, or a programmable logic device (programmable logic device, PLD). The PLD may be a complex programmable logic device (complex programmable logic device, CPLD), a field programmable gate array (field programmable gate array, FPGA), generic array logic (generic array logic, GAL), or any combination thereof.

For more detailed descriptions of the image encoding (or image decoding) apparatus, refer to the related descriptions in the embodiments shown in the accompanying drawings. Details are not described herein. It may be understood that the image encoding (or image decoding) apparatus shown in the accompanying drawings is merely an example provided in embodiments. Based on different image encoding (or image decoding) processes or services, the image encoding (or image decoding) apparatus may include more or fewer units. This is not limited in this application. When the image encoding (or image decoding) apparatus is implemented by hardware, the hardware may be implemented by using a processor or a chip. The chip includes an interface circuit and a control circuit. The interface circuit is configured to: receive data from a device other than the processor and transmit the data to the control circuit, or send data from the control circuit to a device other than the processor.

The control circuit is configured to implement, through a logic circuit or by executing code instructions, the method according to any one of the possible implementations of the foregoing embodiments. For beneficial effect, refer to the descriptions of any aspect of foregoing embodiments. Details are not described herein again.

It may be understood that the processor in embodiments of this application may be a CPU, a neural-network processing unit (neural processing unit, NPU), a graphics processing unit (graphics processing unit, GPU), another general-purpose processor, a digital signal processor (digital signal processor, DSP), an ASIC, an FPGA, another programmable logic device, a transistor logic device, a hardware component, or any combination thereof. The general-purpose processor may be a microprocessor or any conventional processor.

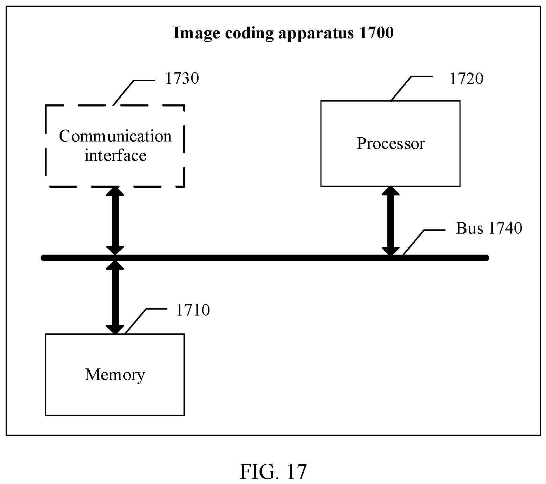

The method steps in embodiments of this application may be implemented by hardware. For example, the hardware is an image coding apparatus. FIG. 17 is a diagram of a structure of an image coding apparatus according to this application. The image coding apparatus 1700 includes a memory 1710 and at least one processor 1720. The processor 1720 may implement the image encoding method and the image decoding method provided in the foregoing embodiments. The memory 1710 is configured to store software instructions corresponding to the foregoing image encoding method and image decoding method. In an optional implementation, in hardware implementation, the image coding apparatus 1700 may be a chip or a chip system on which one or more processors 1720 are packaged. For example, when the image coding apparatus 1700 is configured to implement the method steps in the foregoing embodiments, the processor 1720 included in the image coding apparatus 1700 performs the steps and possible substeps of the foregoing method. In an optional case, the image coding apparatus 1700 may further include a communication interface 1730, and the communication interface 1730 may be configured to receive and send data. For example, the communication interface 1730 is configured to receive an encoding request or a decoding request of a user, or send a bitstream, receive a bitstream, or the like.

In this embodiment of this application, the communication interface 1730, the processor 1720, and the memory 1710 may be connected through a bus 1740. The bus 1740 may be classified into an address bus, a data bus, a control bus, or the like.

It should be noted that the image coding apparatus 1700 may further perform the function of the image encoding apparatus 1500 shown in FIG. 15 and the function of the image decoding apparatus 1600 shown in FIG. 16. Details are not described herein.

The image coding apparatus 1700 provided in this embodiment may be a server, a personal computer, or another image coding apparatus 1700 having a data processing function. This is not limited in this application. For example, the image coding apparatus 1700 may be the encoder side 10 (or the video encoder 100) or the decoder side 20 (or the video decoder 200). For another example, the image coding apparatus 1700 may alternatively have functions of both the encoder side 10 and the decoder side 20. For example, the image coding apparatus 1700 is a video encoding and decoding system (or a video compression system) having video encoding and decoding functions.

The method steps in embodiments of this application may alternatively be implemented by a processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information in the storage medium. Certainly, the storage medium may be a component of the processor. The processor and the storage medium may be located in an ASIC. In addition, the ASIC may be located in a network device or a terminal device. Certainly, the processor and the storage medium may alternatively exist as discrete components in a network device or a terminal device.

In addition, this application further provides a computer-readable storage medium. The computer-readable storage medium stores a bitstream obtained by using the image encoding method provided in any one of the foregoing embodiments. For example, the computer-readable storage medium may be but is not limited to an RAM, a flash memory, an ROM, a PROM, an EPROM, an EEPROM, a register, a hard disk, a removable hard disk, a CD-ROM, or any other form of storage medium well-known in the art.

All or some of the foregoing embodiments may be implemented by software, hardware, firmware, or any combination thereof. When software is used to implement embodiments, all or some embodiments may be implemented in a form of a computer program product. The computer program product includes one or more computer programs or instructions. When the computer programs or instructions are loaded and executed on a computer, the procedures or the functions described in embodiments of this application are all or partially performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; may be an optical medium, for example, a digital video disc (digital video disc, DVD); or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In this application, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. In text descriptions of this application, a character "/" indicates an "or" relationship between the associated objects. In a formula in this application, a character "/" indicates a "division" relationship between the associated objects.

It may be understood that various numbers in embodiments of this application are merely used for distinguishing for ease of description and are not used to limit the scope of embodiments of this application. Sequence numbers of the foregoing processes do not mean execution sequences. The execution sequences of the processes should be determined based on functions and internal logic of the processes.

## Claims

1. An image decoding method, wherein the method comprises:

   parsing a bitstream, to obtain at least one optical flow set, wherein the at least one optical flow set comprises a first optical flow set, the first optical flow set comprises one or more feature domain optical flows, the first optical flow set corresponds to a first feature map of a reference frame of a first image frame, and any one of the one or more feature domain optical flows indicates motion information between a feature map of the first image frame and the first feature map;

   processing the first feature map based on the one or more feature domain optical flows, to obtain one or more intermediate feature maps corresponding to the first feature map;

   fusing the one or more intermediate feature maps, to obtain a first predicted feature map of the first image frame; and

   decoding the first image frame based on the first predicted feature map, to obtain a first image.

2. The method according to claim 1, wherein the processing the first feature map based on the one or more feature domain optical flows, to obtain one or more intermediate feature maps corresponding to the first feature map comprises:

   parsing the bitstream, to obtain the first feature map; and

   performing warping (warping) on the first feature map based on a first feature domain optical flow, to obtain an intermediate feature map corresponding to the first feature domain optical flow, wherein the first feature domain optical flow is any one of the one or more feature domain optical flows.

3. The method according to claim 1 or 2, wherein the first optical flow set further corresponds to a second feature map of the reference frame; and
   before the decoding the first image frame based on the first predicted feature map, to obtain a first image, the method further comprises:

   processing the second feature map based on the one or more feature domain optical flows, to obtain one or more intermediate feature maps corresponding to the second feature map; and fusing the one or more intermediate feature maps corresponding to the second feature map, to obtain a second predicted feature map of the first image frame; and
   the decoding the first image frame based on the first predicted feature map, to obtain a first image comprises:
   decoding the first image frame based on the first predicted feature map and the second predicted feature map, to obtain the first image.

4. The method according to any one of claims 1 to 3, wherein the fusing the one or more intermediate feature maps, to obtain a first predicted feature map of the first image frame comprises:

   obtaining one or more weight values of the one or more intermediate feature maps, wherein one intermediate feature map corresponds to one weight value, and the weight value indicates a weight occupied by the intermediate feature map in the first predicted feature map; and
   processing, based on the one or more weight values, the one or more intermediate feature maps corresponding to the one or more weight values respectively, and adding all processed intermediate feature maps, to obtain the first predicted feature map.

5. The method according to any one of claims 1 to 3, wherein the fusing the one or more intermediate feature maps, to obtain a first predicted feature map of the first image frame comprises:
   inputting, to a feature fusion model, the one or more intermediate feature maps corresponding to the first feature map, to obtain the first predicted feature map, wherein the feature fusion model comprises a convolutional network layer, and the convolutional network layer is used to fuse the one or more intermediate feature maps.

6. The method according to any one of claims 1 to 5, wherein the method further comprises:

obtaining a feature map of the first image;
obtaining an enhanced feature map based on the feature map of the first image, the first feature map, and the first predicted feature map; and
processing the first image based on the enhanced feature map, to obtain a second image, wherein definition of the second image is higher than definition of the first image.

7. The method according to claim 6, wherein the processing the first image based on the enhanced feature map, to obtain a second image comprises:

obtaining an enhancement layer image of the first image based on the enhanced feature map; and
reconstructing the first image based on the enhancement layer image, to obtain the second image.

8. An image encoding method, wherein the method comprises:

obtaining a feature map of a first image frame and a first feature map of a reference frame of the first image frame;
obtaining at least one optical flow set based on the feature map of the first image frame and the first feature map, wherein the at least one optical flow set comprises a first optical flow set, the first optical flow set comprises one or more feature domain optical flows, the first optical flow set corresponds to the first feature map, and any one of the one or more feature domain optical flows indicates motion information between the feature map of the first image frame and the first feature map;
processing the first feature map based on the one or more feature domain optical flows, to obtain one or more intermediate feature maps corresponding to the first feature map;
fusing the one or more intermediate feature maps, to obtain a first predicted feature map of the first image frame; and
encoding the first image frame based on the first predicted feature map, to obtain a bitstream.

9. The method according to claim 8, wherein the processing the first feature map based on the one or more feature domain optical flows, to obtain one or more intermediate feature maps corresponding to the first feature map comprises:
performing warping (warping) on the first feature map based on a first feature domain optical flow, to obtain an intermediate feature map corresponding to the first feature domain optical flow, wherein the first feature domain optical flow is any one of the one or more feature domain optical flows.

10. The method according to claim 8 or 9, wherein the first optical flow set further corresponds to a second feature map of the reference frame; and
before the encoding the first image frame based on the first predicted feature map, to obtain a bitstream, the method further comprises:

processing the second feature map based on the one or more feature domain optical flows, to obtain one or more intermediate feature maps corresponding to the second feature map; and
fusing the one or more intermediate feature maps corresponding to the second feature map, to obtain a second predicted feature map of the first image frame; and
the encoding the first image frame based on the first predicted feature map, to obtain a bitstream comprises:
encoding the first image frame based on the first predicted feature map and the second predicted feature map, to obtain the bitstream.

11. The method according to any one of claims 8 to 10, wherein the fusing the one or more intermediate feature maps, to obtain a first predicted feature map of the first image frame comprises:

obtaining one or more weight values of the one or more intermediate feature maps, wherein one intermediate feature map corresponds to one weight value, and the weight value indicates a weight occupied by the intermediate feature map in the first predicted feature map; and
processing, based on the one or more weight values, the one or more intermediate feature maps corresponding to the one or more weight values respectively, and adding all processed intermediate feature maps, to obtain the first predicted feature map.

12. The method according to any one of claims 8 to 11, wherein the fusing the one or more intermediate feature maps, to obtain a first predicted feature map of the first image frame comprises:
inputting, to a feature fusion model, the one or more intermediate feature maps corresponding to the first feature map, to obtain the first predicted feature map, wherein the feature fusion model comprises a convolutional network layer, and the convolutional network layer is used to fuse the one or more intermediate feature maps.

13. An image decoding apparatus, wherein the apparatus comprises:

a bitstream unit, configured to parse a bitstream, to obtain at least one optical flow set, wherein the at least one optical flow set comprises a first optical flow set, the first optical flow set comprises one or more feature domain optical flows, the first optical flow set corresponds to a first feature map of a reference frame of a first image frame, and any one of the one or more feature domain optical flows indicates motion information between a feature map of the first image frame and the first feature map;
a processing unit, configured to process the first feature map based on the one or more feature domain optical flows, to obtain one or more intermediate feature maps corresponding to the first feature map;
a fusion unit, configured to fuse the one or more intermediate feature maps, to obtain a first predicted feature map of the first image frame; and
a decoding unit, configured to decode the first image frame based on the first predicted feature map, to obtain a first image.

14. The apparatus according to claim 13, wherein the processing unit is specifically configured to: parse the bitstream, to obtain the first feature map; and perform warping (warping) on the first feature map based on a first feature domain optical flow, to obtain an intermediate feature map corresponding to the first feature domain optical flow, wherein the first feature domain optical flow is any one of the one or more feature domain optical flows.

15. The apparatus according to claim 13 or 14, wherein the first optical flow set further corresponds to a second feature map of the reference frame;

the processing unit is further configured to process the second feature map based on the one or more feature domain optical flows, to obtain one or more intermediate feature maps corresponding to the second feature map;
the fusion unit is further configured to fuse the one or more intermediate feature maps corresponding to the second feature map, to obtain a second predicted feature map of the first image frame; and
the decoding unit is specifically configured to decode the first image frame based on the first predicted feature map and the second predicted feature map, to obtain the first image.

16. The apparatus according to any one of claims 13 to 15, wherein the fusion unit is specifically configured to: obtain one or more weight values of the one or more intermediate feature maps, wherein one intermediate feature map corresponds to one weight value, and the weight value indicates a weight occupied by the intermediate feature map in the first predicted feature map; and process, based on the one or more weight values, the one or more intermediate feature maps corresponding to the one or more weight values respectively, and add all processed intermediate feature maps, to obtain the first predicted feature map.

17. The apparatus according to any one of claims 13 to 15, wherein the fusion unit is specifically configured to input, to a feature fusion model, the one or more intermediate feature maps corresponding to the first feature map, to obtain the first predicted feature map, wherein the feature fusion model comprises a convolutional network layer, and the convolutional network layer is used to fuse the one or more intermediate feature maps.

18. The apparatus according to any one of claims 13 to 17, wherein the apparatus further comprises an obtaining unit and an enhancement unit, wherein

the obtaining unit is configured to obtain a feature map of the first image;
the fusion unit is further configured to obtain an enhanced feature map based on the feature map of the first image, the first feature map, and the first predicted feature map; and
the enhancement unit is configured to process the first image based on the enhanced feature map, to obtain a second image, wherein definition of the second image is higher than definition of the first image.

19. The apparatus according to claim 18, wherein the enhancement unit is specifically configured to: obtain an enhancement layer image of the first image based on the enhanced feature map; and reconstruct the first image based on the enhancement layer image, to obtain the second image.

20. An image encoding apparatus, wherein the apparatus comprises:

an obtaining unit, configured to obtain a feature map of a first image frame and a first feature map of a reference frame of the first image frame;
a processing unit, configured to obtain at least one optical flow set based on the feature map of the first image frame and the first feature map, wherein the at least one optical flow set comprises a first optical flow set, the first optical flow set comprises one or more feature domain optical flows, the first optical flow set corresponds to the first feature map, and any one of the one or more feature domain optical flows indicates motion information between the feature map of the first image frame and the first feature map, wherein

the processing unit is further configured to process the first feature map based on the one or more feature domain optical flows, to obtain one or more intermediate feature maps corresponding to the first feature map;

a fusion unit, configured to fuse the one or more intermediate feature maps, to obtain a first predicted feature map of the first image frame; and

an encoding unit, configured to encode the first image frame based on the first predicted feature map, to obtain a bitstream.

21. The apparatus according to claim 20, wherein the processing unit is specifically configured to perform warping (warping) on the first feature map based on a first feature domain optical flow, to obtain an intermediate feature map corresponding to the first feature domain optical flow, wherein the first feature domain optical flow is any one of the one or more feature domain optical flows.

22. The apparatus according to claim 20 or 21, wherein the first optical flow set further corresponds to a second feature map of the reference frame;

the processing unit is further configured to process the second feature map based on the one or more feature domain optical flows, to obtain one or more intermediate feature maps corresponding to the second feature map;

the fusion unit is further configured to fuse the one or more intermediate feature maps corresponding to the second feature map, to obtain a second predicted feature map of the first image frame; and

the encoding unit is specifically configured to encode the first image frame based on the first predicted feature map and the second predicted feature map, to obtain the bitstream.

23. The apparatus according to any one of claims 20 to 22, wherein the fusion unit is specifically configured to: obtain one or more weight values of the one or more intermediate feature maps, wherein one intermediate feature map corresponds to one weight value, and the weight value indicates a weight occupied by the intermediate feature map in the first predicted feature map; and process, based on the one or more weight values, the one or more intermediate feature maps corresponding to the one or more weight values respectively, and add all processed intermediate feature maps, to obtain the first predicted feature map.

24. The apparatus according to any one of claims 20 to 22, wherein the fusion unit is specifically configured to input, to a feature fusion model, the one or more intermediate feature maps corresponding to the first feature map, to obtain the first predicted feature map, wherein the feature fusion model comprises a convolutional network layer, and the convolutional network layer is used to fuse the one or more intermediate feature maps.

25. An image coding apparatus, comprising a memory and a processor, wherein the memory is configured to store program code, and the processor is configured to invoke the program code, to implement the method according to any one of claims 1 to 7 or implement the method according to any one of claims 8 to 12.

26. A computer-readable storage medium, wherein the storage medium stores a computer program or instructions, and when the computer program or the instructions are executed by an electronic device, the method according to any one of claims 1 to 7 is implemented, or the method according to any one of claims 8 to 12 is implemented.

27. A computer-readable storage medium, wherein the storage medium stores a bitstream obtained by using the method according to any one of claims 8 to 12.

28. A video encoding and decoding system, comprising an encoder side and a decoder side, wherein

the encoder side is configured to perform the method according to any one of claims 1 to 7; and

the decoder side is configured to perform the method according to any one of claims 8 to 12.

29. A computer program product, wherein when the computer program product is run on an electronic device, the electronic device implements the method according to any one of claims 1 to 7, and/or the electronic device implements the method according to any one of claims 8 to 12.

30. A chip, comprising a control circuit and an interface circuit, wherein

the interface circuit is configured to: receive a signal from a device other than the chip and transmit the signal to a processor, or send a signal from the control circuit to a device other than the chip; and

the control circuit is configured to implement, through a logic circuit or by executing code instructions, the method according to any one of claims 1 to 7 or the method according to any one of claims 8 to 12.

FIG. 1

(A)                                    (B)

FIG. 2

**A. Forward warping**

**B. Backward warping**

FIG. 3

**Video compression system 400**

Variable motion compensation component

Feature extraction

Image frame

$X_t$

Decoded frame buffer

$X_{t-1}$

$F_t$

$F_{t-1\_ref}$

Motion estimation module 410

$O_t$

Optical flow compression module 420

$O'_t$

Motion compensation module 430

$F_{t\_pre}$

$R_t$

Residual compression module 440

$R'_t$

Entropy coding module 450

Feature buffer of a reference frame

$F_{t-1\_ref}$

$F_{t-2\_ref}$

$F_{t-3\_ref}$

Multi-frame feature fusion module 460

$F'_{t\_initial}$

$F'_{t\_final}$

Frame reconstruction

Reconstructed frame

$X'_t$

FIG. 4

FIG. 5

Image frame 1         Reference frame

Convolutional layer 64×5×5/2

Residual block processing layer 64×3×3

Residual block processing layer 64×3×3

Residual block processing layer 64×3×3

$f_t$         $f_{t-1}$

FIG. 6

**Network layer 2**

Convolutional layer 64×5×5/2

Residual block processing layer
64×3×3

Residual block processing layer
64×3×3

Residual block processing layer
64×3×3

⊕

×3

**Network layer 1**

Residual block processing layer
64×3×3

Residual block processing layer
64×3×3

Residual block processing layer
64×3×3

⊕

Convolutional layer 64×5×5/2

×3

Feature map of an image frame 1
First feature map

Upsampling network

Downsampling network

Optical flow set

Residual block processing layer
64×3×3

Convolutional layer
64×3×3

Activation layer

Convolutional layer
64×3×3

⊕

FIG. 7

**Optical flow set 1**

Feature domain optical flows $v_{1-m}$

**Warping**

Feature map of a reference frame $f_{t-1}$

$f_{t-1}$ ... $f_{t-m}$

**Intermediate feature map**

**Feature fusion**

**Predicted feature map**

FIG. 8

EP 4 498 678 A1

**Bitstream**

**S910: A decoder side parses the bitstream, to obtain at least one optical flow set**

First feature map of a reference frame $f_{t-1}$

Feature domain optical flow $v_t$

**Optical flow set 1**

**S920: The decoder side processes the first feature map based on one or more feature domain optical flows included in the optical flow set 1, to obtain one or more intermediate feature maps**

Intermediate feature maps $f'_{t-1}$ ... $f'_{t-m}$

**S930: The decoder side fuses the one or more intermediate feature maps, to obtain a first predicted feature map of a first image frame**

First predicted feature map $f_{t\_pre}$

**S940: The decoder side decodes the first image frame based on the first predicted feature map, to obtain a first image**

Decoded first image

FIG. 9

Network layer 2

Convolutional layer 64×5×5/2

Residual block processing layer
64×3×3

Residual block processing layer
64×3×3

Residual block processing layer
64×3×3

$\oplus$

×3

Feature encoding network

Feature decoding network

Network layer 1

Residual block processing layer
64×3×3

Residual block processing layer
64×3×3

Residual block processing layer
64×3×3

$\oplus$

Convolutional layer 64×5×5/2

×3

Residual block processing layer
64×3×3

Convolutional layer
64×3×3

Activation layer

Convolutional layer
64×3×3

Optional $\oplus$

FIG. 10

**S1110: Obtain a feature map**

First image

Feature map of the first image

First feature map of a reference frame $f_{t-1}$

**S1120: Determine an enhanced feature map**

Enhanced feature map

First predicted feature map $f_{t\_pre}$

**S1130: Reconstruct the image**

Second image

FIG. 11

Residual block processing layer
64×3×3

Residual block processing layer
64×3×3

Residual block processing layer
64×3×3

$\oplus$

Deconvolutional layer 3×5×5/2

FIG. 12

(a)

(b)

(c)

(d)

FIG. 13

FIG. 14

**Image encoding apparatus 1500**

| | |
|---|---|
| Obtaining unit 1510 | Processing unit 1520 |
| Fusion unit 1530 | Encoding unit 1540 |

FIG. 15

**Image decoding apparatus 1600**

| | |
|---|---|
| Bitstream unit 1610 | Processing unit 1620 |
| Fusion unit 1630 | Decoding unit 1640 |

FIG. 16

**Image coding apparatus 1700**

1730

Communication interface

1720

Processor

Bus 1740

1710

Memory

FIG. 17

## INTERNATIONAL SEARCH REPORT

| International application No. |
| --- |
| **PCT/CN2023/071928** |

**A.    CLASSIFICATION OF SUBJECT MATTER**

H04N19/577(2014.01)i

According to International Patent Classification (IPC) or to both national classification and IPC

**B.    FIELDS SEARCHED**

Minimum documentation searched (classification system followed by classification symbols)

IPC:H04N19

Documentation searched other than minimum documentation to the extent that such documents are included in the fields searched

Electronic data base consulted during the international search (name of data base and, where practicable, search terms used)

CNTXT, ENTXTC, ENTXT, DWPI, CJFD, CNKI: 光流, 参考帧, 特征, 运动, 融合, 加权, 面向特征空间的深度视频压缩, warp, reference frame, feature, movement, combine, weight, FVC

**C.    DOCUMENTS CONSIDERED TO BE RELEVANT**

| Category* | Citation of document, with indication, where appropriate, of the relevant passages | Relevant to claim No. |
| --- | --- | --- |
| X | CN 113949883 A (WUHAN TCL GROUP INDUSTRIAL RESEARCH INSTITUTE CO., LTD.) 18 January 2022 (2022-01-18)<br>    description, paragraphs 0063-0144, and figures 1-10 | 1, 2, 4, 5, 8, 9, 11-14, 16, 17, 20, 21, 23-30 |
| A | CN 110913218 A (HEFEI TUCODEC INFORMATION TECHNOLOGY CO., LTD.) 24 March 2020 (2020-03-24)<br>    entire document | 1-30 |
| A | CN 113542651 A (BEIJING MEGVII TECHNOLOGY CO., LTD.) 22 October 2021 (2021-10-22)<br>    entire document | 1-30 |
| A | CN 114339219 A (ZHEJIANG DAHUA TECHNOLOGY CO., LTD.) 12 April 2022 (2022-04-12)<br>    entire document | 1-30 |
| A | US 2018098066 A1 (QUALCOMM INC.) 05 April 2018 (2018-04-05)<br>    entire document | 1-30 |
| A | US 2021314474 A1 (SAMSUNG ELECTRONICS CO., LTD.) 07 October 2021 (2021-10-07)<br>    entire document | 1-30 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 April 2023** | **24 April 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/071928**

| Patent document cited in search report | | | Publication date (day/month/year) | Patent family member(s) | | | Publication date (day/month/year) |
|---|---|---|---|---|---|---|---|
| CN | 113949883 | A | 18 January 2022 | None | | | |
| CN | 110913218 | A | 24 March 2020 | None | | | |
| CN | 113542651 | A | 22 October 2021 | None | | | |
| CN | 114339219 | A | 12 April 2022 | None | | | |
| US | 2018098066 | A1 | 05 April 2018 | JP | 2019535198 | A | 05 December 2019 |
| | | | | KR | 20190059282 | A | 30 May 2019 |
| | | | | SG | 11201901631 | SA | 29 April 2019 |
| | | | | US | 10341659 | B2 | 02 July 2019 |
| | | | | EP | 3523966 | A1 | 14 August 2019 |
| | | | | WO | 2018067848 | A1 | 12 April 2018 |
| | | | | TW | 201826791 | A | 16 July 2018 |
| | | | | TWI | 775780 | B | 01 September 2022 |
| | | | | BR | 112019006882 | A2 | 25 June 2019 |
| US | 2021314474 | A1 | 07 October 2021 | US | 2023022753 | A1 | 26 January 2023 |
| | | | | WO | 2021201438 | A1 | 07 October 2021 |
| | | | | US | 11503221 | B2 | 15 November 2022 |

Form PCT/ISA/210 (patent family annex) (July 2022)

**EP 4 498 678 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210397258